# EUROPEAN PATENT SPECIFICATION

(11) **EP 0 642 108 B1**
(45) Date of publication and mention of the grant of the patent: **06.03.2002**
(21) Application number: 94112067.7
(22) Date of filing: 02.08.1994
(51) Int. Cl.: G08G 1/0969, G01C 21/20

(54) **Navigation system**
Navigationsanlage
Système de navigation

(30) Priority: 27.12.1993 JP 33282393; 24.12.1993 JP 32746093; 07.08.1993 JP 21496493
(43) Date of publication of application: 08.03.1995
(73) Proprietor: AISIN AW CO., LTD., Anjo-shi Aichi 444-1192 (JP)
(72) Inventor: Nimura, Mitsuhiro, Okazaki-shi, Aichi 444 (JP); Morimoto, Kyomi, Nishio-shi, Aichi 445 (JP); Ito, Yasunobu, Okazaki-shi, Aichi 444 (JP); Ohara, Shigekazu, Yata-Cho, Chiryu-shi, Aichi 472 (JP)
(74) Representative: VOSSIUS & PARTNER

(56) References cited:
- DE-A- 4 219 171
- PATENT ABSTRACTS OF JAPAN vol. 013, no. 488 (P-954), 7 November 1989 & JP-A-01 195314 (SUMITOMO ELECTRIC IND LTD), 7 August 1989,

## Description

The present invention relates to a navigation system capable of registering a telephone number for a set point.

The navigation system guides a route so that a user can drive his car safely to visit a first destination. In recent years, techniques for improving the performances and functions such as the accuracy, operability and visibility of navigation have been vigorously developed to provide a variety of systems. This navigation system is equipped with a display screen to be used for setting the route or a display screen to be opened automatically or upon request of the driver at the time of route guidance. The navigation system is equipped as its display screen after the start of guide with at least: section maps for guiding a wide area covering several sections of the set whole route including such a section as is being run; and an intersection map for guiding the intersections.

The navigation system not only has those section maps and intersection maps but also: provides the remaining distance and the information such as the name or turning direction of an intersection to be turned, so that the route may be followed without fail ; teaches characteristic objects so that the route can be confirmed during the drive; guides the route not only by the display but also by voices; displays the route on the map so that the guidance may be made on the displayed route for the actual drive; and scrolls the map automatically along the route so that the route can be confirmed.

In this navigation system, in order to set the route, it is necessary to input the starting point and the destination. When the starting point and the destination are determined by this inputting, the route retrieving is executed from the road information data around and between the starting point and the destination, so that the optimum one of a plurality of routes is set. As the method of inputting the starting point and the destination, there have been proposed: a method by which the positions to be registered such as the starting point or the destination are classified by genre according to the sight - seeing, parking areas or restaurants or coded according to the areas such as prefectures or cities so that the codes may be inputted ; a method by which not only the code number is inputted but also the menu is displayed so that the items in the menu may be sequentially selected and inputted; a method by which node data are joined to define road networks so that the position may be inputted in terms of east longitudes and north latitudes ; and a method by which a telephone number is inputted. In another method, not only the route between two points of the present position or an arbitrary starting point and the destination is retrieved, but also the priority of the transit point or the toll road is specified for the retrieval.

As examples of the system of this kind: the telephone number inputting system is disclosed in JP-A-187898/1990 ; the genre or code number inputting system is disclosed in JP-A-173820/1989 ; the destination setting system according to the code number is disclosed in JP-A-173823/1989 ; and the system capable of inputting the desired transit point is disclosed in JP-A-3899 /1990.

For the telephone number inputting system, however, it is practically difficult to store the positions corresponding to all telephone numbers in the memory, because the data is excessively massive. In the system of the prior art, therefore, the positions corresponding to specific telephone numbers and the positions of representative points corresponding to the toll/local numbers are stored as the data in a CD - ROM or the like.
In case, moreover, a telephone number inputted belongs to specific ones, the map around the position corresponding to that telephone number is displayed on the screen. For other telephone numbers, however, the map around the representative point of the toll/local number is displayed. In case, therefore, a telephone number of a personal subscriber is inputted, the map displayed is around the representative point of the toll/local number. Thus, there arises a problem that the positional accuracy in the call of the map is insufficient.

Furthermore DE-A-42 19 171 relates to an apparatus for displaying maps on a screen with a destination for a car driver. The input for the destination can be performed by inputting of a telephone number corresponding to the destination. Furthermore, the present position will be shown on the screen by pushing a corresponding key. However, DE-A-42 19 171 only discloses pre-storing a telephone number and positional coordinates on a map corresponding thereto in a telephone number retrieval data memory. There is a simple retrieval of these data and no hint is given that a user can newly register a telephone number and positional coordinates on a memory as in the invention.

In order to solve the above - specified problem, therefore, the present invention has an object to provide a telephone number inputting type navigation system which can easily retrieve the position corresponding to the telephone number frequently used by the user.

The object is achieved by the features of the claims. a result of the invention the telephone number can be registered to correspond to the positional coordinates of the point inputted, so that the positional coordinates can be detected from the telephone number.

In case the point corresponding to the telephone number inputted by the telephone number input means is not in the list stored with the telephone number and the coordinates in the corresponding manner, the point corresponding to the telephone number has its positional coordinates registered together with the telephone number and is set as the point coordinates. As a result, when the user inputs the same telephone number again, the positional coordinates of the point stored corresponding to the telephone number can be read out to set the point easily.

In case the telephone number inputted by the telephone number input means is not in the list, the positional coordinates of the representative point are read out from the toll/local number of the telephone number, and the map corresponding to those coordinates is read out of the map data and displayed in the display means. Then, the point is set in that map, and the inputted telephone number and the positional coordinates of the set point are stored in the list so that the positional coordinates of the point are set as the positional coordinates. In case the inputted telephone number is in the list, the positional coordinates corresponding to the telephone number are read out so that the point corresponding to the positional coordinates are set as the point coordinates. As a result, if the user inputs-the same telephone number again, the positional coordinates of the point stored to correspond to the telephone number can be read out so that the point can be easily set.
Fig. 1 is a block diagram showing one embodiment of a telephone number inputting type navigation system according to the present invention;
Figs. 2A and 2B are diagrams showing examples of the construction of a list for inputting telephone numbers ;
Fig. 3 is a block diagram showing an example of the construction of the individual sections of the navigation system ;
Fig. 4 (a) is a flow chart for explaining a processing routine of setting a destination through a telephone number;
Fig. 4 (b) is a flow chart for explaining the processing routine of setting the destination through the telephone number;
Fig. 5 is a flow chart for explaining a processing routine of inputting a memory point ;
Fig. 6 is a flow chart for explaining a processing routine after a point has been registered by using a position inputting function through a telephone number ;
Figs. 7 (a) and 7 (b) are diagrams showing an ex ample of a screen and switches to be used in the telephone number inputting;
Figs. 8 (a) and 8 (b) are diagrams for explaining a method of selecting numerals by upward/downward switches;
Fig. 9 is a block diagram showing one embodiment of a vehicular navigation system having an automatic telephone transmitting function;
Fig. 10 is a diagram showing an example of the display screen and the switches ;
Fig. 11 is a diagram showing an example of a contacts - by-telephone screen ;
Fig. 12 is a diagram showing an example of a destination setting screen ;
Fig. 13 is a block diagram showing an example showing the entire construction of a navigation system having the automatic telephone transmitting function ;
Figs. 14 (a) to 14 (d) are diagrams showing an example of the construction of data to be used for contacts - by - telephone of a weather forecast;
Figs. 15 (a) to 15 (c) are diagrams showing an example of transition of screens for the automatic transmission of the weather forecast ;
Fig. 16 is a flow chart for explaining the automatic transmission routine of the weather forecast ;
Fig. 17 is a flow chart for explaining the acquisition of the " weather forecast service" from toll /local telephone numbers;
Fig. 18 is a flow chart for explaining the acquisition of the " weather forecast service" from coordinates ;
Figs. 19 (a) and 19 (b) are diagrams showing an example of the construction of data to be used for retrieving a traffic information center from coordinates ;
Fig. 20 is a diagram showing an example of the construction of data to be used for retrieving the traffic information center from a toll/local telephone number;
Fig. 21 is a diagram showing an example of the construction of road name code number data;
Figs. 22 (a) and 22 (b) are diagrams showing an example of the construction of data to be used for retrieving the traffic information center from the road name code number;
Figs. 23 (a) to 23 (c) are diagrams showing transitions of screens for transmitting traffic information automatically ;
Fig. 24 is a flow chart for explaining an automatic transmission routine of the traffic information;
Figs. 25 (a) and 25 (b) are diagrams showing an example of screens for automatic transmissions of the traffic information of a route scheduled to pass during a route information display;
Figs. 26 (a) to 26 (e) are diagrams showing an example of the construction of data to be used for contacts - by - telephone of a destination ;
Fig. 27 is a flow chart showing an example of transitions of screens for the automatic transmission to the destination;
Figs. 28 (a) to 28 (d) are diagrams for explaining the automatic transmission to the destination ;
Figs. 29 (a) to 29 (c) are diagrams showing an example of transition destination setting screens by indexing the place name;
Fig. 30 is a diagram showing an example of transition of screens till the destination is set;
Figs. 31 (a) to 31 (d) are diagrams showing an example of transitions of destination setting screens by a national map ;
Figs. 32 (a) to 32 (d) are diagrams showing an example of transitions of the destination setting screens by a telephone number;
Fig. 33 is a block diagram showing a hardware construction for realizing a function to display a map around the point by inputting a telephone number in the navigation system ;
Fig. 34 is a block diagram showing one example of the construction of a navigation system having the function to display the map around the point by inputting the telephone number;
Fig. 35 is a block diagram showing a routine of displaying a map around the present position by inputting a local telephone number;
Fig. 36 is a diagram showing one example of layout of the telephone number inputting screen and a transition of the screens at a screen operating time ;
Fig. 37 is a diagram showing one example of the layout of a telephone number inputting screen for inputting a toll number while observing the toll number displayed ;
Fig. 38 is a diagram showing one example of the layout of a telephone number inputting screen for inputting a local number in case the displayed toll number is correct;
Fig. 39 is a diagram showing a map expressing a specific example of a toll number ; and
Fig. 40 is a flow chart showing a routine of displaying a map around the present position.

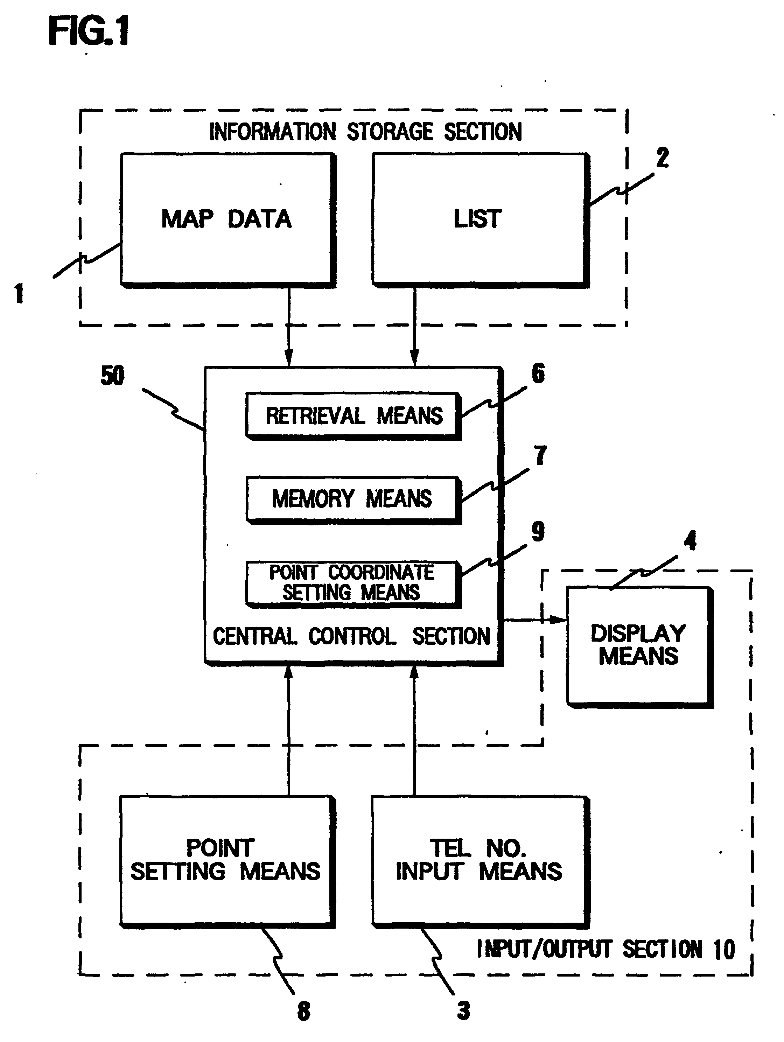

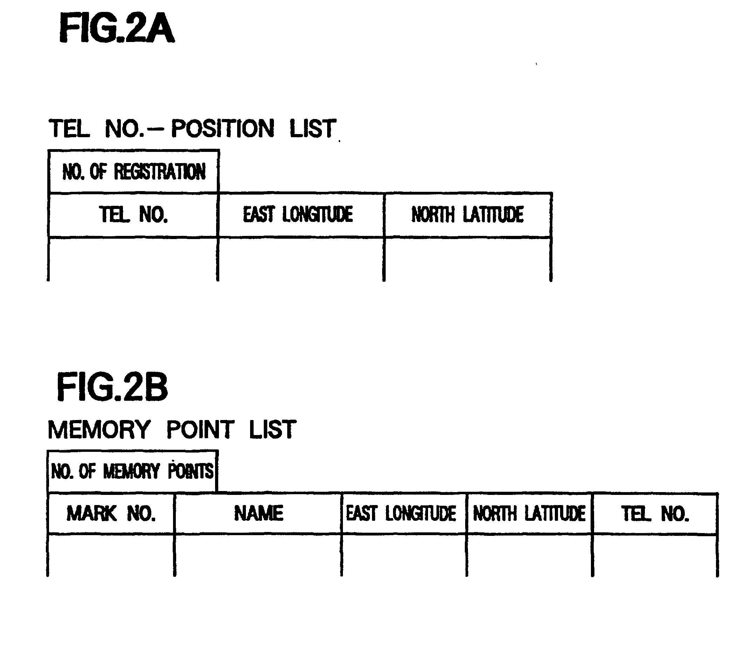

Fig. 1 is a block diagram showing one embodiment of a telephone number inputting type navigation system according to the present invention, and Figs. 2A and 2B are diagrams showing examples of the construction of a list for inputting telephone numbers.

In Fig. 1, a map data 1 has at least positional information and stores the graphic information of a map to be used for setting a point. A list 2 has such coordinates on the map as correspond to telephone numbers stored in advance in memory means such as a CD - ROM. Telephone number input means 3 is composed of switches such as ten keys for inputting a telephone number, numeral selecting keys and a shift key. Display means 4 not only reads and displays the map data 1 around the coordinates corresponding to the telephone number inputted by the telephone number input means 3, for example, and but also displays a map by reading the corresponding map data 1 by another input means. Point setting means 8 inputs the coordinates of a point which is designated by an inputting through a touch panel or a decision key through a position cursor on the map displayed by the display means 4. The central control section 50 includes: memory means 7 for storing the telephone number inputted by the telephone number input means 3 and the positional coordinates of a point set by point setting means 8, in a corresponding manner ; retrieval means 6 for retrieving the telephone number when this number is inputted by the telephone number input means 3; and point coordinate setting means 9 for setting the positional coordinates of the point set by the point setting means 8, as the point coordinates. The memory means 7 is constructed of a programmable memory such as a RAM or a floppy disc, and is stored with such a list as is shown in Fig. 2 (b). Moreover, the list 2, in which the telephone numbers and the coordinates on the map are made in advance to correspond to one another, is exemplified by the telephone number - position list, as shown in Fig. 2 (a).

In case a telephone number is inputted by the telephone number input means 3, for example, it is retrieved whether nor not the inputted telephone number is stored in the list 2. If the answer is YES, the positional coordinates corresponding to the telephone number are read out, and the map data around the positional coordinates is read out and displayed in the display means 4. If the inputted telephone number is not stored in the list 2, it is retrieved whether or not the telephone number is stored in the memory means 7. If the answer is YES, the map is displayed like before. Otherwise, the map data 1 is read out with reference to the coordinates of the representative point of the toll/local number of the telephone number, and the map is displayed. In case, moreover, it is intended by the user to display and set a desired point and to register it, the point can be stored and registered in the memory means. Then, the desired point can be easily called by inputting its telephone number. Alternatively, in case the inputted telephone number is not stored in the list 2 or the memory means 7, the map may be scrolled, and the point may be set. If, in this case, the set point is apart a predetermined distance or more from the representative point of the toll/local number, it is decided that a miss input has been made, and the telephone number may not be stored in the list. Furthermore, this decision of a miss input may be decided by storing not only the representative position of the toll/local number but also a range corresponding to the toll/local number in advance.

In the present embodiment, the data to be retrieved by the retrieval means is exemplified by the data (of the list 2) stored in advance in the CD - ROM or the like and the data (of the memory means 7) written by the user, but may have a programmable data construction.

First of all, the telephone number - position list, as shown in Fig. 2A, registers the coordinates corresponding to the telephone numbers in terms of east longitudes and north latitudes, and its registration is carried out, for example, by inputting a telephone number to display a map around the representative point of the toll / local number and by retrieving and setting the corresponding position. If the telephone number and the coordinates are thus registered in the telephone number - position list, a map around the position of the coordinates is drawn when the telephone number is inputted.

In the present embodiment, there are used the two list architectures, as described above. However, no special restriction should be made upon the list architecture, and a list architecture can be modified in various manners.

On the other hand, the memory point list, as shown in Fig. 2B, is one which is desired to be registered as a memory point by the user. This list contains a column of telephone numbers in addition to columns of mark numbers, names of towns and addresses, east longitudes and north latitudes.

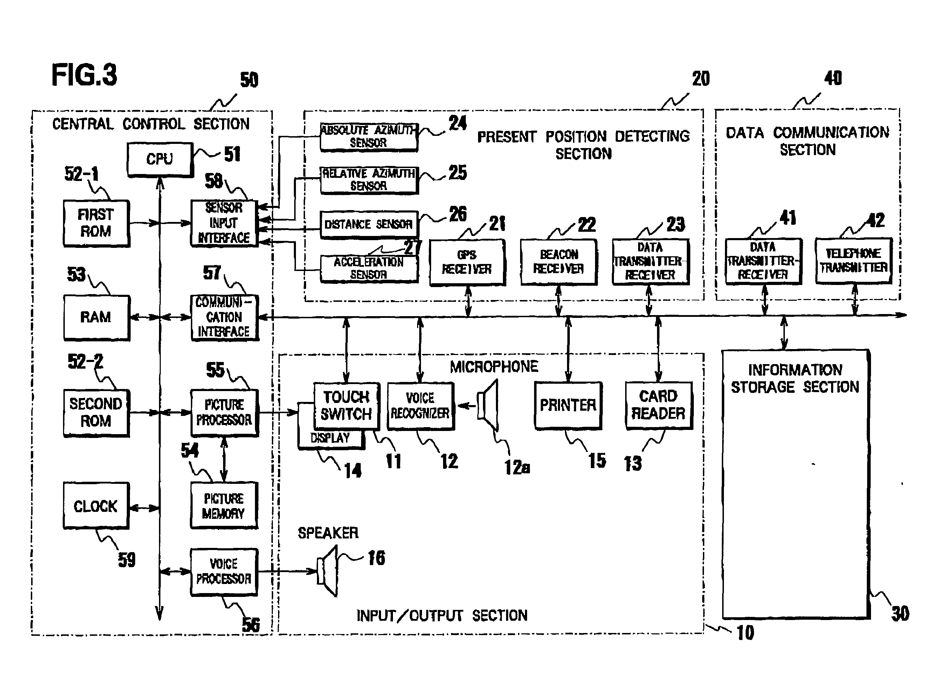

Here will be described the specific constructions of the individual sections of the navigation system. Fig. 3 shows an example of the construction of the individual sections of the navigation system.

This navigation system is basically constructed, as shown in Fig. 3, to include: an input/output section 10 for inputting/ outputting information on a route guide ; a present position detecting section 20 for detecting information on the present position of the user's vehicle ; information storage section 30 stored with a navigation data necessary for calculating the route and a display guide data necessary for the guidance ; a data communication section 40 for transmissions and receptions of navigation data with an information source such as an information center or an electronic note or for contacts-by-telephone; and a central control section 50 for executing the display and guide necessary for the route retrieval and guide and for controlling the entire system.

The input/output section 10 is given functions to input a destination, to instruct the central control section 50 of the navigations according to the will of the user, so that the guide information may be given in voices and/or by screen displays when the driver desires so, and to output the processed data and the communication data for the printing operations. As the means for realizing these functions, the input section includes : switches 11 such as touch switches or key switches for inputting a point such as a destination or a passed point in terms of a telephone number or coordinates so as to set it, for requesting the route guide and for switching the modes; a voice recognizer 12; and a card reader 13 for reading out the data stored in an IC card or a magnetic card. On the other hand, the output section includes: a display 14 for displaying the input data in the screen or the route guide automatically in response to the request of the driver; a printer 15 for printing the data processed by the central control section 50, the data stored in the information storage section 30, and the transmission data transmitted from the information center; and a speaker 16 for outputting the route guide in voices.

The display 14 is constructed of a color CRT or a color liquid crystal display and displays in colors not only all the screens necessary for the navigations such as a route setting screen based upon the map data and guide data processed by the central control section, a section map screen and an intersection map screen but also buttons in the main screen for setting the route guide, for guiding the route guidance and for switching the screens. Especially the information of a passed intersection such as the name of the passed intersection is occasionally popped up and displayed in colors in the section map diagram.

This display is so mounted in the instrument panel near the driver's seat that the driver can confirm the present position of the vehicle and acquire the information on the coming route by glancing at the section map. Moreover, the display 14 is equipped with: the touch panel corresponding to the display of the function buttons so that the aforementioned operations are executed on the basis of the input signal by touching the buttons; and the key switches in the periphery of the screen so that the switching of the modes for the guide and the destination setting is executed by pushing the key switches. The input signal generating means composed of those key switches and touch panels also constitute the input section.

The voice recognizer 12 also constitutes the input signal generating means and produces the signals to be processed by the central control section 50 after the user has recognized the coordinate information to be inputted in voices through a microphone 12a.

The present position detecting section 20 is composed of : a GPS receiver 21 making use of the global positioning system (i.e., GPS) ; a beacon receiver 22 ; a data transmitter - receiver 23 for receiving the corrected signals of the GPS by using the cellular phone or FM multiplex signals ; an absolute azimuth sensor 24 exemplified by a magnetic sensor ; a relative azimuth sensor 25 exemplified by a wheel sensor or a steering sensor; a distance sensor 26 for detecting the covered distance in terms of the R.P.M. of the wheels ; and an acceleration sensor 27.

The information memory section 30 is a data base which is stored with all the data necessary for the route guidance, as includes map data, intersection data, node data, road data, photographic data. destination data, guide point data, detailed destination data, road name data, branching point data, address data, display guide data, voice guide data and toll /local number data.

The data communication section 40 is composed of : a data transmitter - receiver 41 for transmitting/receiving data with an external information sensor, which stores mass route guide information and offers it upon request of a user, and for transmitting/receiving data to input the point coordinates by using the destination information which is stored in advance by the user in the information storage media (i.e., digital data storage means) such as an electronic note or IC card; and a telephone transmitter 42 for automating telephone transmissions both to specify a point thereby to acquire the peripheral information of the point and to communicate with a destination by telephone after the destination has been set.

The central control section 50 is composed of: a CPU 51 for executing arithmetic operations; a first ROM 52-1 stored with not only programs for processing a route retrieval, for a display control necessary for the route guide and for a voice output control for a voice guide but also data necessary for the programs; a RAM 53 for temporarily storing the route guide information retrieved and the data being arithmetically processed ; a second ROM 52-1 stored with display information data necessary for the route guide and the map display ; a picture memory (i.e., V - RAM) 54 stored with picture data to be used for the screen display ; a picture processor 55 for fetching the picture data from the picture memory on the basis of a display control signal coming from the CPU 51 to process the picture data and output the processed data to the display ; a voice processor 56 for synthesizing and converting the voice, phrase, one sentence and/or sounds read out of the information memory section 30 on the basis of a voice output control signal coming from the CPU into analog signals to output these signals to the speaker; a communication interface 57 for transferring the input/output data through communications ; a sensor input interface 58 for fetching the sensor signal of the present position detecting section ; and a clock 59 for wiring a data and a time in the internal diagnosis information. Here, the route guide is so constructed that the driver can select either the screen display or the voice output.

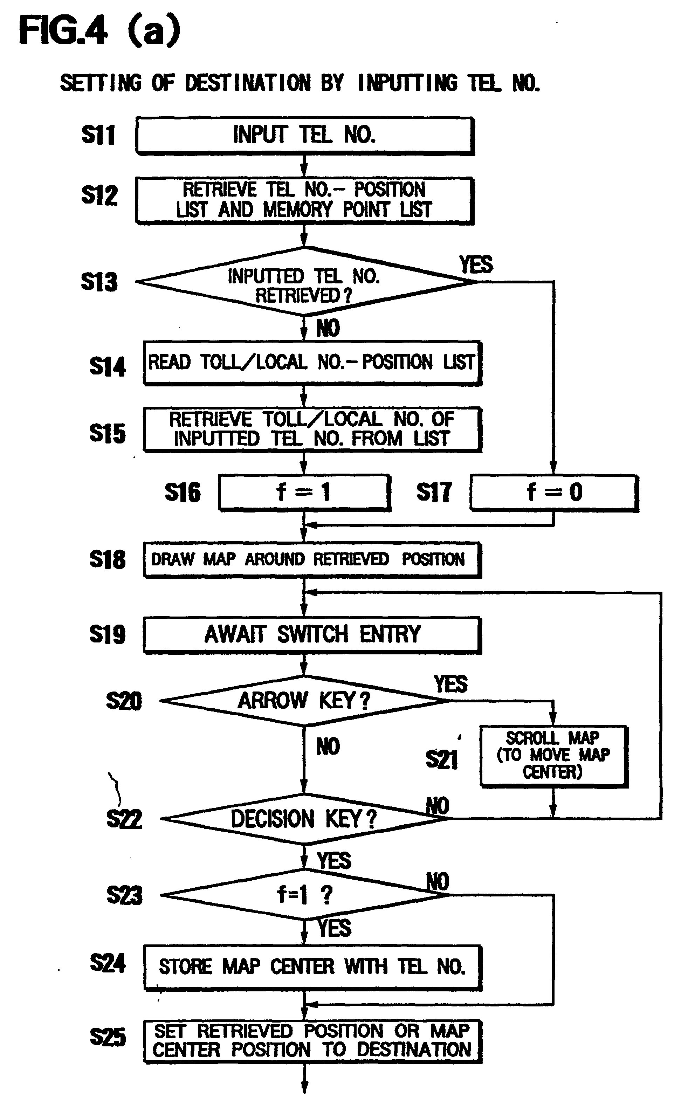

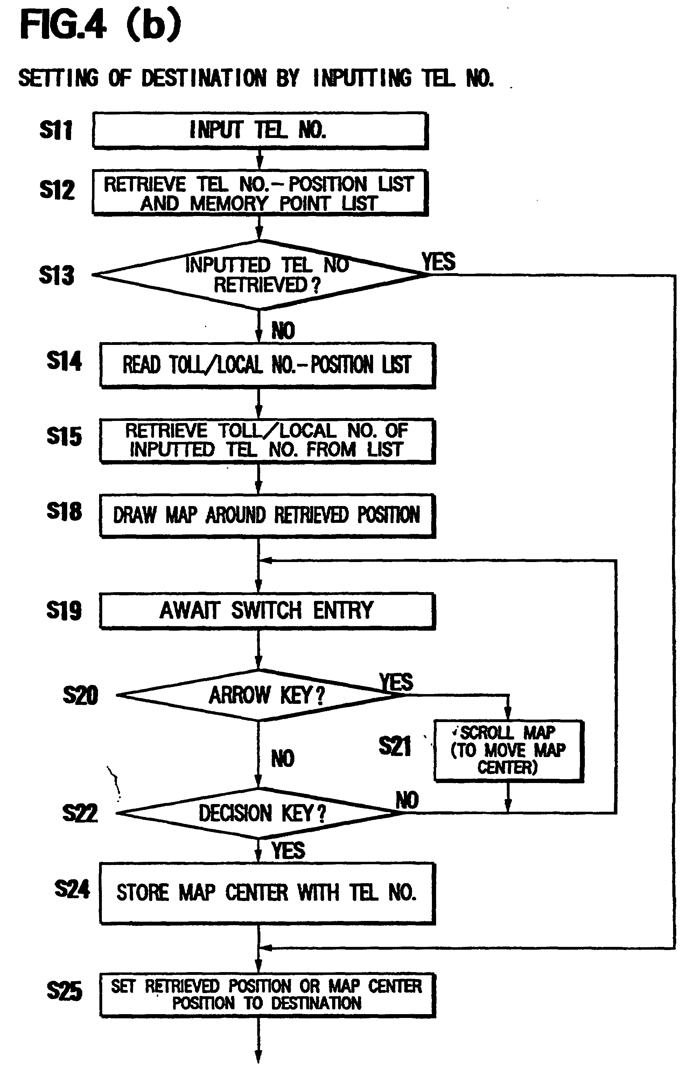

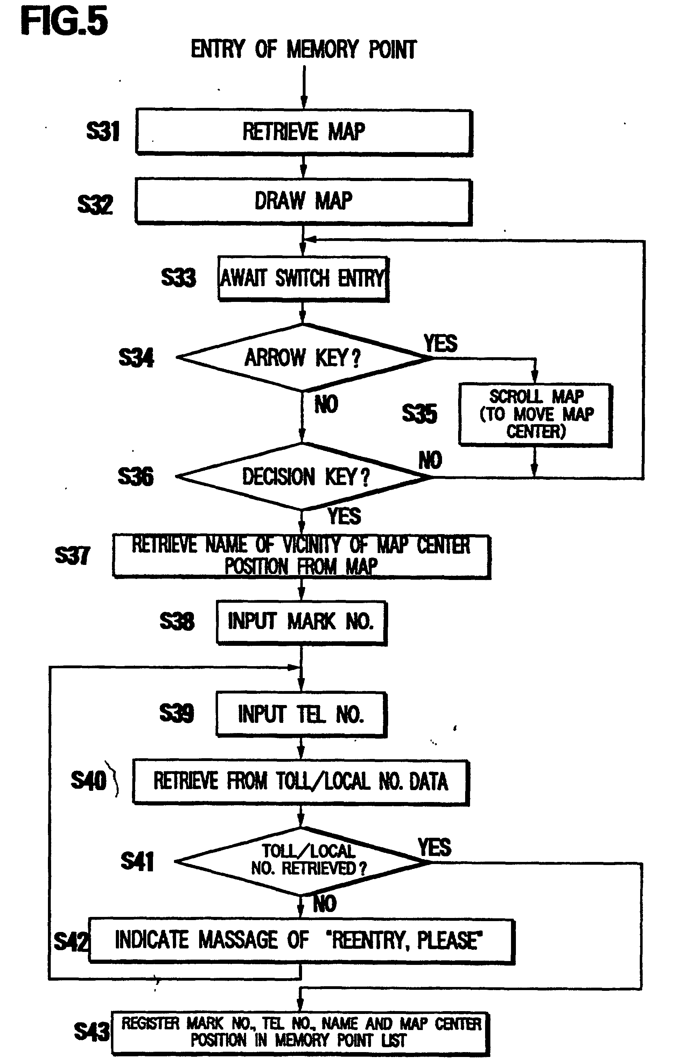

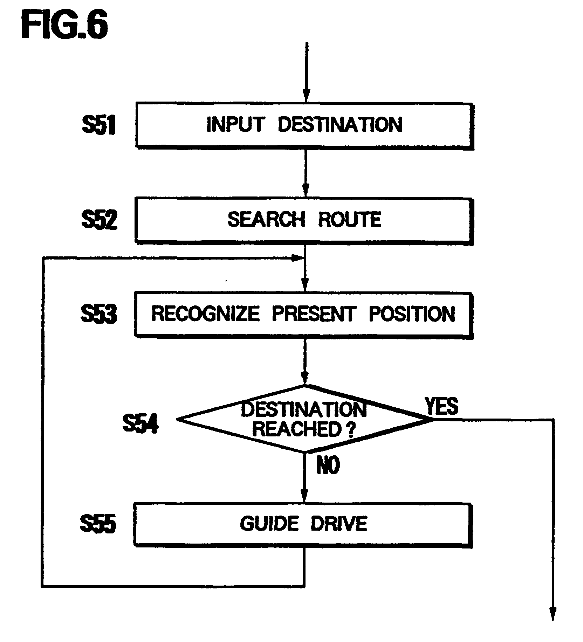

Here will be described a routine of a telephone number inputting method according to the present invention. Fig. 4 is a flow chart for explaining a processing routine of setting the destination through the telephone number. Fig. 5 is a flow chart for explaining a processing routine of inputting a memory point. Fig. 6 is a flow chart for explaining a processing routine after a point has been registered by using a position inputting function through a telephone number.

According to the processing routine of setting a destination by inputting a telephone number, as shown in Fig. 4, a telephone number is inputted, for ex ample, as shown in Fig. 4 (a). Then, the telephone number is retrieved at first from the telephone number-position list to examine (at Steps S11 to S13) whether or not the inputted telephone number is stored. If the telephone number is not retrieved, the toll /local number - position list is read from the memory section and retrieved from the toll/local number of the inputted telephone number to set a flag f = 1. If the telephone number is retrieved, the flag f is set to f = 0 (at Steps S14 to S17). Next, there is drawn (at Step S18) a map around the position which is retrieved from the telephone number - position list or the toll/ local number - position list. Then, the map is scrolled according to the switch inputting of the arrow keys to move the map center. With the switch inputting of the decision key, it is decided whether or not the flag f = 1 (at Steps S19 to S23). If the flag f = 1, the map center is so additionally registered in the telephone number-position list as to correspond to the telephone number. If the flag f = 0, the map center position is set as the destination (at Steps S24 and S25).

Likewise in Fig. 4 (b), it is retrieved at S13 whether or not the telephone number inputted is in the list stored in the memory section. If the answer is NO, the operations of S14, S15, S18 to S22 and S24 are executed like above to set the map center position as the destination. If the telephone number is retrieved, on the other hand, the positional information corresponding to the inputted telephone number is acquired as it is to set the coordinate position as the destination (at Step S25).

On the other hand, the routine of inputting a memory point is executed, as shown in Fig. 5, by retrieving the map by the genre, the telephone number and the present position to draw the map of a desired range (at Steps S31 and S32). Next, the map center is moved by scrolling the map in accordance with the switch inputting of the arrow keys. With the switch inputting of the decision key, the name of the vicinity of the map center position is retrieved from the map (at Steps S33 to S37). Next, the mark number and telephone number selected by the user are inputted to retrieve the toll/local number list thereby to confirm whether or not the toll/ local number is stored (otherwise the message of "Reentry, please" is displayed). Then, the mark number, the telephone number, the name and the coordinates of the map center position are registered in the memory point list.

After the position inputting function by the telephone number has been used to register the point, the destination is inputted by the telephone number (at Step S51), as shown in Fig. 6. Then, the route to pass through the individual intersections to the destination is retrieved (at Step S52). If this route is determined, the drive guides are repeated till the destination is reached (at Steps S53 to S55) while recognizing the present position by the present position detecting section 20.

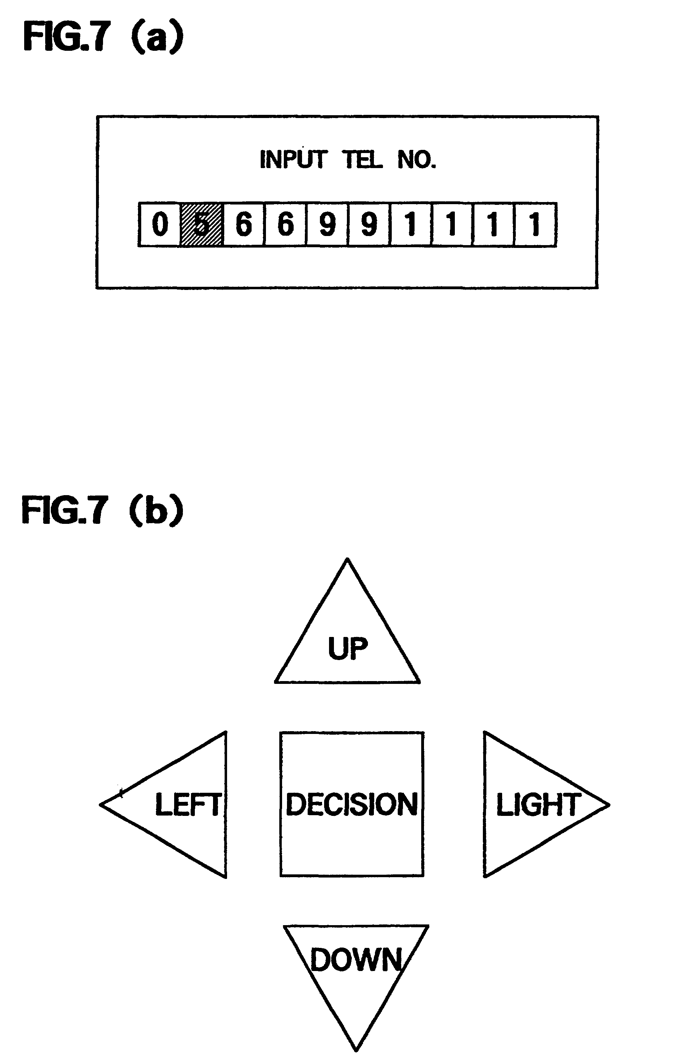

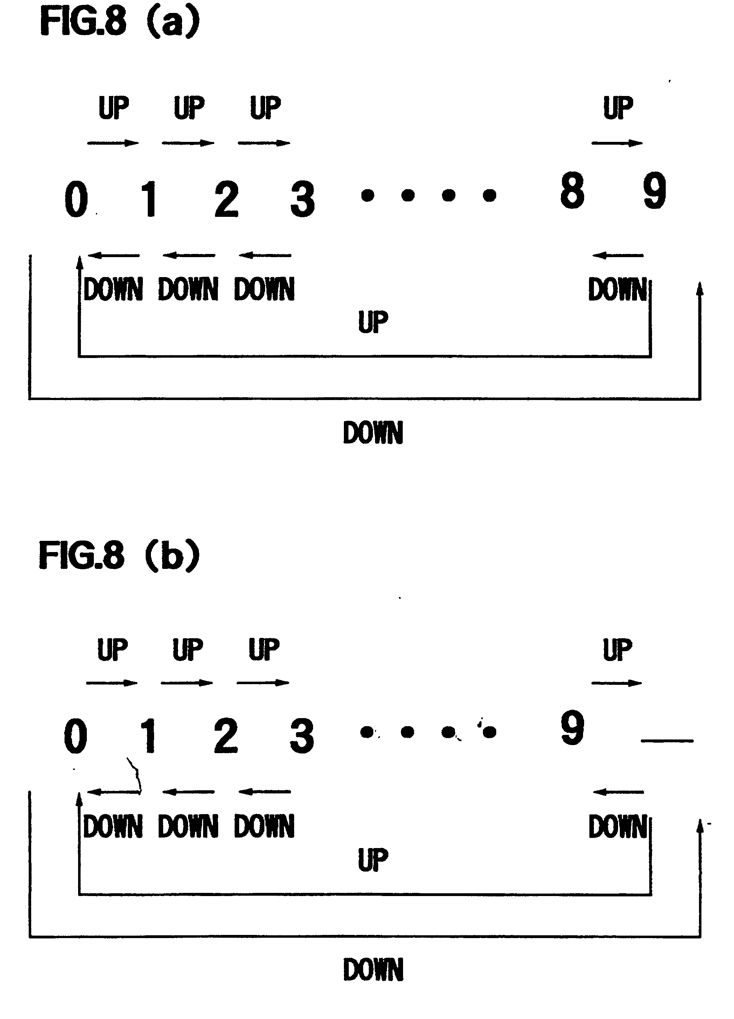

Figs. 7 (a) and 7 (b) are diagrams respectively showing examples of a screen and switches to be used in the telephone number inputting, and Fig. 8 presents diagrams for explaining a method of selecting numerals by upward/downward switches.

The screen of the case in which a telephone number is to be inputted is set, as shown in Fig. 7 (a), with a cursor, as hatched, in any of ten figures. When the upward and downward switches are pushed, as shown in Fig. 7 (b), the numerals are moved up or down, as shown in Fig. 8. Moreover, the shifting is carried out by the leftward and rightward switches, as shown in Fig. 7 (b). Specifically, the upward switch increments the number at the figure of the cursor, and the numeral next to 9 is 0, as shown in Fig. 8 (a), or is returned to 0 through spaces, as shown in Fig. 8 (b). The downward switch reduces the numeral to the contrary. The leftward switch returns the cursor position to the lefthand figure, and the lefthand end figure cancels the telephone number inputting. The rightward switch advances the cursor position to the righthand figures and returns it to the lefthand end when the righthand end is reached. Moreover, the decision switch ends the inputting by setting the displayed number as the telephone number.

Incidentally, the present invention should not be limited to the embodiment thus far described but can be modified in various manners. In the aforementioned embodiment, for example, it is decided for the memory point entry whether or not the toll/local number is retrieved. If the answer is NO, the message of the reentry is displayed. Despite of this fact, however, the telephone number may be registered as a dummy by the confirming operation.

Here will be described an embodiment of the navigation system having an automatic telephone transmitting function with reference to the accompanying drawings.

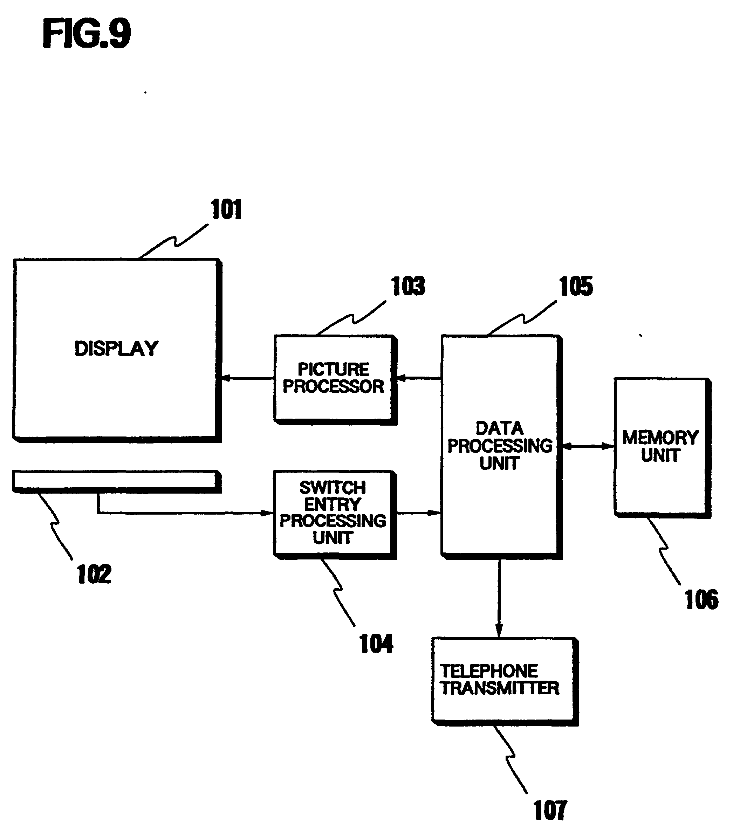

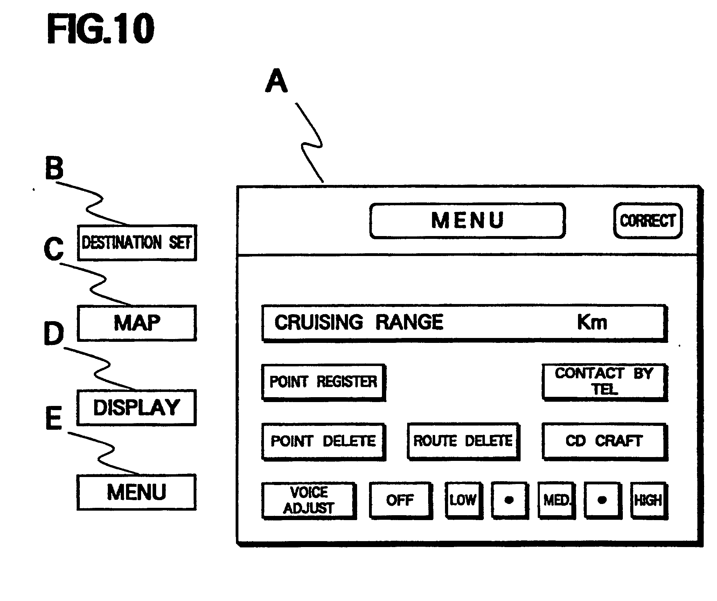

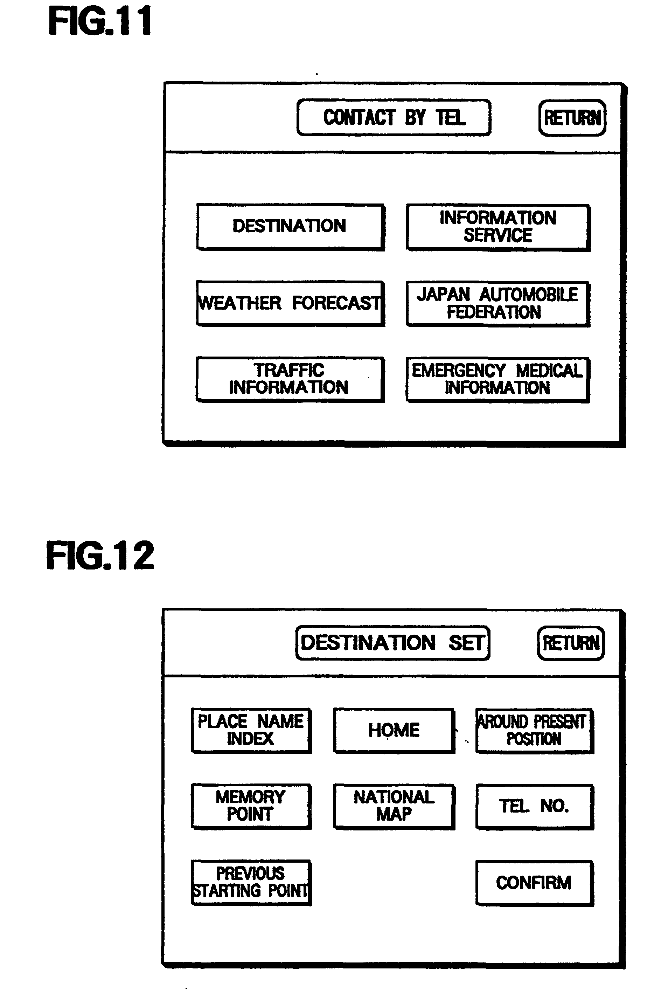

Fig. 9 is a block diagram showing one embodiment of a vehicular navigation system having an automatic telephone transmitting function; Fig. 10 is a diagram showing an example of the display screen and the switches ; Fig. 11 is a diagram showing an example of a cotacts - by - telephone screen ; and Fig. 12 is a diagram showing an example of a destination setting screen. In these Figures : reference numeral 101 designates a display ; numeral 102 switches; numeral 103 a picture processor ; numeral 104 a switch entry processing unit; numeral 105 a data processing unit; 106 a memory section; numeral 107 a telephone transmitter; letter A a display input screen ; letter B a destination setting switch ; letter C a map switch; letter D a display switch ; and letter E a letter switch.

In Fig. 9, the display 101 is constructed of a color CRT or a color liquid crystal display and and is mounted in the instrument panel near the driver's seat. The display 101 displays in colors not only all the screens necessary for the navigations such as a route setting screen based upon the map data and guide data processed by the data processing section 105, a section map screen and an intersection map screen, and contacts - by - telephone screens but also buttons in the main screen for setting the route guide, for guiding the route guidance and for switching the screens. Especially the information of a passed intersection such as the name of the passed intersection is occasionally popped up and displayed in colors in the section map diagram. As a result, the driver can confirm the present position of the vehicle and acquire the information on the coming route by glancing at the section map. In the contacts - by - telephone screen, the selection branches are classified and hierarchically displayed so that the place of telephone contact can be selected by a single action to effect the automatic transmission.

The picture processor 103 outputs a desired picture on the screen of the display 101 by storing the picture memory with the picture data to be used for the display on the screen of the display 101, by fetching the picture data from the picture memory on the basis of the display control signal coming from the data processor 105 and by processing the picture data graphically.

The switches 102 are exemplified by the touch switches of the touch panel, as provided to correspond to the function buttons displayed in the display 101, and the button switches disposed around the display 101, so that the various operations are executed on the basis of the signals inputted by those switches. The touch switches on the touch panel and the button switches constitute the input signal generating means to construct the input section, and the switch entry processor 104 acts as an interface for the input section to process the inputs.

The memory section 106 is stored with not only the various data necessary for the route retrieval and guides but also the telephone numbers of the destinations, the points to pass and other point periphery information such as the weather forecast telephone number, the information guide service number, the JAF (i.e., Japan Automobile Federation) and the road traffic information service. The telephone transmitter 107 transmits the telephone number which is read out from the memory section 106 by the data processor 105 and sent as the transmission notice.

The data processor 105 processes the input information of the switches 102 through the switch entry processor 104 to control the display content of the screen of the display 101 through the picture processor 103 by executing the programs for acquiring the point data of a destination to be set and the data of the present position and for retrieving the route, the programs for the display control necessary for the route guide and the voice output control necessary for the voice guide, and the program for the contacts - by-telephone. The data processor 105 writes and reads the data in and from the memory section 106 and informs the telephone transmitter 107 of the transmission.

In the present embodiment, the screen of the contacts- by-telephone is selected on the aforementioned display 101. From this screen, the telephone transmissions are automatically carried out by specifying the kinds or items of the weather forecast, the telephone information service, the JAF, the traffic information, the destination, the transit point and the registered place, by specifying the places around the destination or the present position for each kind or item, by specifying the point on the map, and by retrieving the telephone number of the kind and item specified through the toll/local number from that point. Specifically, since the set destination or the present position has coordinates as the positional information, the toll/local number of the point can be retrieved from the coordinates, and the telephone number of the "weather forecast service" of the corresponding district can be acquired from the toll /local number. For the destination, as additional information, the telephone number of the. "weather forecast service" of the corresponding district can be likewise acquired from the toll/local number of the telephone number. For the point other than the destination and the present position, the telephone number of the " weather forecast service" of the corresponding district can be acquired from the toll/local number by retrieving a city from the prefecture to display a map of the desired area, by specifying the point on the map, and by specifying the road name on the screen displaying the route information to retrieve the toll/local number. Moreover, the telephone transmissions can be carried out upon not only the information of the periphery of the specified point but also the destination, the transit point, the station and the hospital. In this case, the telephone number may be acquired for the telephone transmissions by selecting the touch switch of the destination or by registering the telephone number of the transit point, the station or the hospital as the registered place by genre, by displaying the name of the registered place in a list or mark on the map and by specifying the displayed name.

Here will be described the operations of the individual switches and the transitions of screens of the display 101 with reference to Figs. 10 to 12. In Fig. 10, the display input screen A is a combination of the touch panel with the screen of the display 101 and displays the menu screen which is made when a menu switch E is operated. This menu screen has its cruising range region displayed with the cruising range which is calculated on the basis of the remainder of gasoline and the mileage, and the regions for other correction, point setting and contacts - by - telephone are displayed as the touch switches for selecting the functions to be described in the following.

Of the individual touch keys, the "CORRECT" is a key for corrections in case the magnetic sensor provided as the point detecting means is influenced by noises. The "POINT REGISTER" is a key to be used when the driver registers an arbitrary point as the point data from the map data. In the navigation system, generally speaking, as the information for setting the destination, the destinations classified and registered, for example, are recorded in advance so that they are retrieved to set a destination. The "POINT REGISTER" key is an additional one for the driver to register a special point such as his own house, the houses of his acquaintances, several facilities or accommodations. This point information includes the number, the name, the coordinates and telephone number of the point, which are registered on the basis of the coordinates set on the map. The "CONTACT BY TEL" is a key to be selected in the case of a telephone call by the automatic transmission. An example of the display to be switched and displayed by selecting the "CONTACT BY TEL" key is shown in Fig. 11. The "POINT DELETE" is a key to be selected in case the point registered in the "POINT REGISTER" mode is to be deleted; the "ROUTE DELETE" is a key to be selected in case the route registered by the route retrieval by another destination setting is to be deleted; and "CD CRAFT" is a key to be selected in case a sort of the CD (i.e., Compact Disc), if mounted is to be utilized in the displayed input screen. Moreover: the "VOLUME ADJUST" is a key to be selected in case the volume of a voice output system provided but not shown is to be adjusted; the "OFF" is a key for stopping the voice output; and "LOW", " MEDIUM" and "HIGH" are keys to be used for increasing or decreasing the volume.

A destination setting switch B is a switch for setting a destination in the navigation system. When this destination setting switch B is operated, the screen for setting the destination, as shown in Fig. 12, is displayed in the display input screen A. After this destination setting, the route retrieval is carried out to effect the guidance along the route from the present position to the destination by dis playing the map or characteristic objects and/or by voices. A map switch C is -operated when the map for the route guide is displayed for the intrinsic navigation system, and a display switch D is used to display a screen for the information on the operations of an air conditioner and other performances and for controlling the display of the screen such as the brightness.

In the "CONTACT BY TEL" appearing in Fig. 11, the " DESTINATION" is a key for automatic telephone transmissions to the destination set already. On the other hand, the telephone transmissions may be carried out by selecting the place which has been registered by the "POINT REGISTER" in the menu screen shown in Fig. 10. In this modification, after this key touch as the " specified point", the selected screen may be switched from the " destination" to the "registered point". Moreover, the registered point, e.g., the list of the registered point is displayed and retrieved by genre, or the map having the registered point marked is displayed so that the telephone transmissions is carried out to the point specified on the map. "INFORMATION SERVICE", "WEATHER FORECAST", "JAF", "TRAFFIC INFORMATION" and "EMERGENCY MEDIAL INFORMATION" are are keys for retrieving the telephone numbers of the "information service", "weather forecast", "JAF", " traffic information center " and "emergency medical center" to perform the telephone transmissions and for acquiring the information around the point.

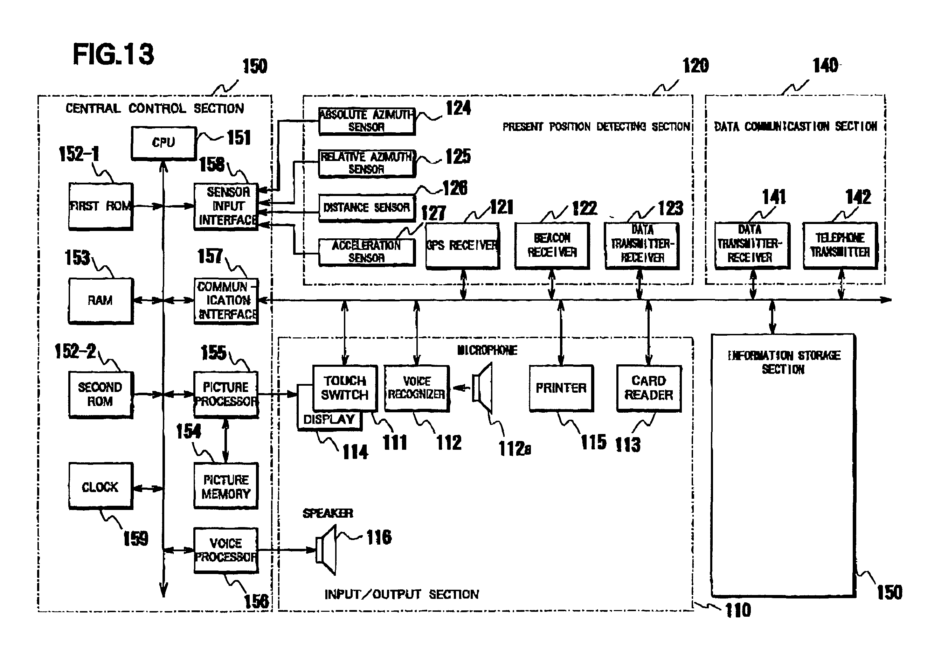

The navigation system for realizing the present embodiment described above has the following entire system construction, for example. Fig. 13 is a diagram showing an example of the entire system construction of the navigation system according to the present embodiment. This navigation system includes: an input / output section 110 for inputting/outputting information on a route guide ; a present position detecting section 120 for detecting information on the present position of the user's vehicle ; information storage section 130 stored with a navigation data necessary for calculating the route and a display guide data necessary for the guidance; a data communication section 140 for transmissions and receptions of navigation data with an information source such as an information center or an electronic note or for contacts - by - telephone ; and a central control section 150 for executing the display and guide necessary for the route retrieval and guide and for controlling the entire system.

The input/output section 110 is given functions to input a destination, to instruct the central control section 150 of the navigations according to the will of the user, so that the guide information may be given in voices and/or by screen displays when the driver desires so, and to output the processed data and the communication data for the printing operations. As the means for realizing these functions, the input section includes : touch switches 111 for inputting a destination in terms of a telephone number or coordinates so as to set it, for requesting the route guide and for switching the modes; a voice recognizer 112; and a car reader 113 for reading out the data stored in an IC card or a magnetic card. On the other hand, the output section includes: a display 114 for displaying the input data in the screen or the route guide automatically in response to the request of the driver; a printer 115 for printing the data processed by the central control section 150, the data stored in the information storage section 130, and the transmission data transmitted from the information center; and a speaker 116 for outputting the route guide in voices.

The display 114 is constructed of a color CRT or a color liquid crystal display and displays in colors not only all the screens necessary for the navigations such as a route setting screen based upon the map data and guide data processed by the central control section 150, a section map screen and an intersection map screen but also buttons in the main screen for setting the route guide, for guiding the route guidance and for switching the screens. Especially the information of a passed intersection such as the name of the passed intersection is occasionally popped up and displayed in colors in the section map diagram. This display is so mounted in the instrument panel near the driver's seat that the driver can confirm the present position of the vehicle and acquire the information on the coming route by glancing at the section map. Moreover, the display 114 is equipped with the touch panel 111 corresponding to the display of the function buttons so that the aforementioned operations are executed on the basis of the input signal by touching the buttons. The input signal generating means composed of those buttons and touch panels also constitute the input section, although its detailed description is omitted here.

The voice recognizer 112 also constitutes the input signal generating means and produces the signals to be processed by the central control section 150 after the user has recognized the coordinate informa tion to be inputted in voices through a microphone 112a.

The present position detecting section 120 is composed of: a GPS receiver 121 making use of the global positioning system (i.e., GPS) ; a beacon receiver 122 ; a data transmitter - receiver 123 for receiving the corrected signals of the GPS by using the cellular phone or FM multiplex signals ; an absolute azimuth sensor 124 exemplified by a magnetic sensor ; a relative azimuth sensor 125 exemplified by a wheel sensor or a steering sensor ; a distance sensor 126 for detecting the covered distance in terms of the R.P.M. of the wheels; and an acceleration sensor 127.

The information memory section 130 is a data base which is stored with all the data necessary for the route guidance, as includes map data, intersection data, node data, road data, photographic data, destination data, guide point data, detailed destination data, road name data, branching point data, address data, display guide data, voice guide data and telephone number data.

The data communication section 140 is composed of: a data transmitter - receiver 141 for transmitting /receiving data with an external information sensor, which stores mass route guide information and offers it upon request of a user, and for transmitting/receiving data to input the point coordinates by using the destination information which is stored in advance by the user in the information storage media (i.e., digital data storage means) such as an electronic note or IC card; and a telephone transmitter 142 for automating telephone transmissions both to specify a point thereby to acquire the peripheral information of the point and to communicate with a destination by telephone after the destination has been set.

The central control section 150 is composed of: a CPU 151 for executing arithmetic operations; a first ROM 152-1 stored with not only programs for processing a route retrieval, for a display control necessary for the route guide and for a voice output control for a voice guide but also data necessary for the programs ; a RAM 153 for temporarily storing the route guide information retrieved such as the point coordinates of the destination or the road code No. and the data being arithmetically processed ; a second ROM 152-1 stored with display information data necessary for the route guide and the map display; a picture memory 154 stored with picture data to be used for the screen display ; a picture processor 155 for fetching the picture data from the picture memory on the basis of a display control signal coming from the CPU 151 to process the picture data and output the processed data to the display; a voice processor 156 for synthesizing and converting the voice, phrase, one sentence and/or sounds read out of the information memory section 130 on the basis of a voice output control signal coming from the CPU into analog signals to output these signals to the speaker; a communication interface 157 for transferring the input/output data through communications; a sensor input interface 158 for fetching the sensor signal of the present position detecting section ; and a clock 159 for wiring a data and a time in the internal diagnosis information. Here, the route guide is so constructed that the driver can select either the screen display or the voice output.

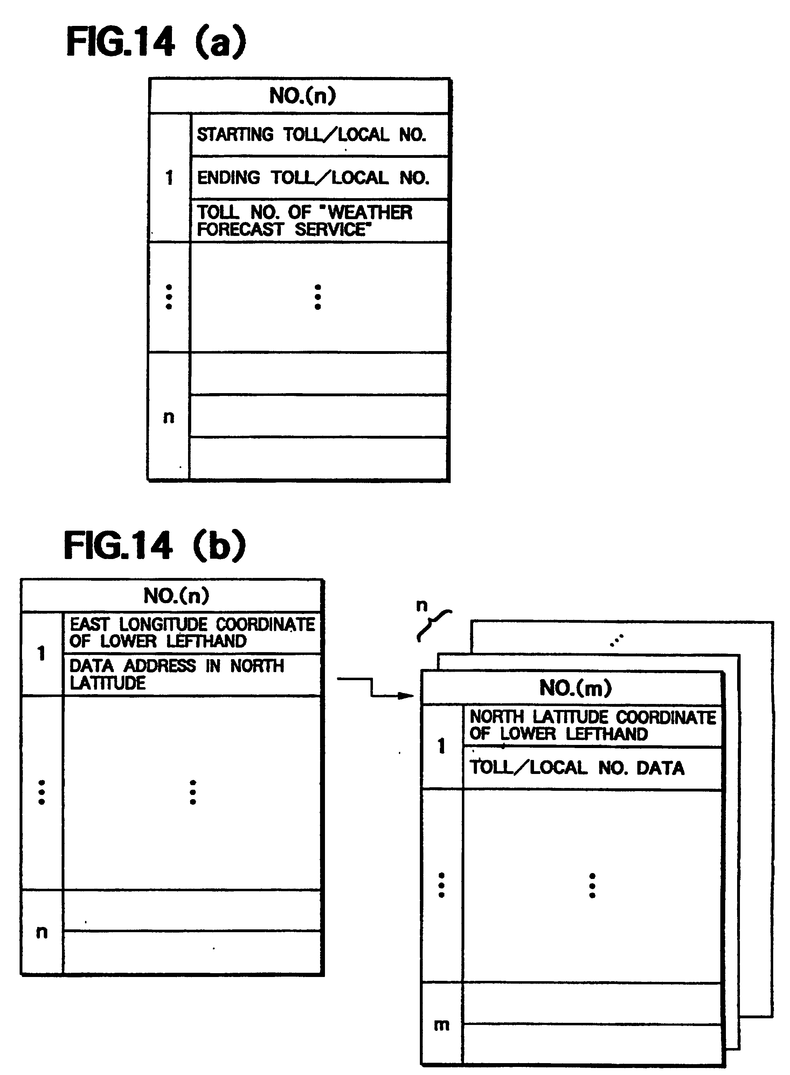

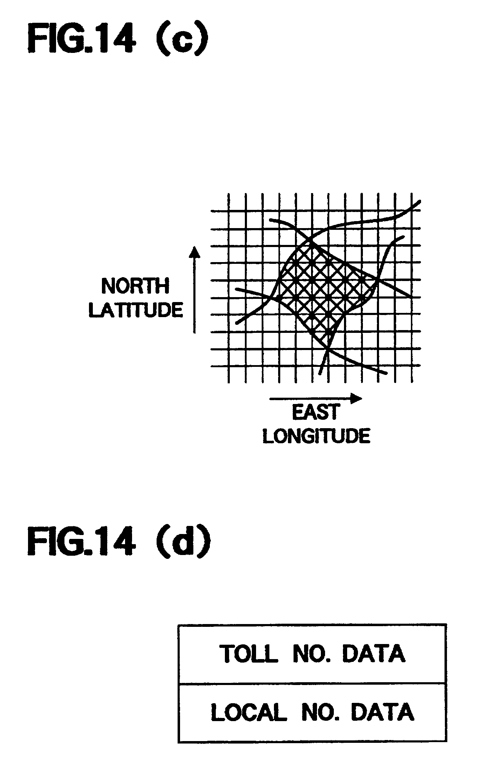

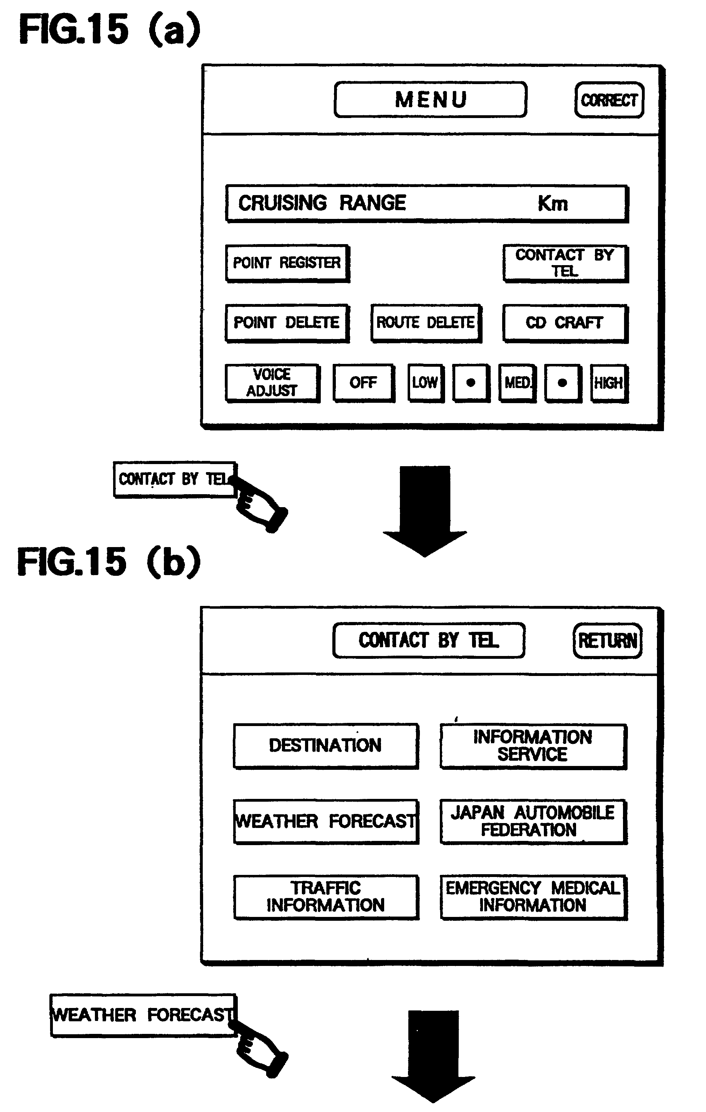

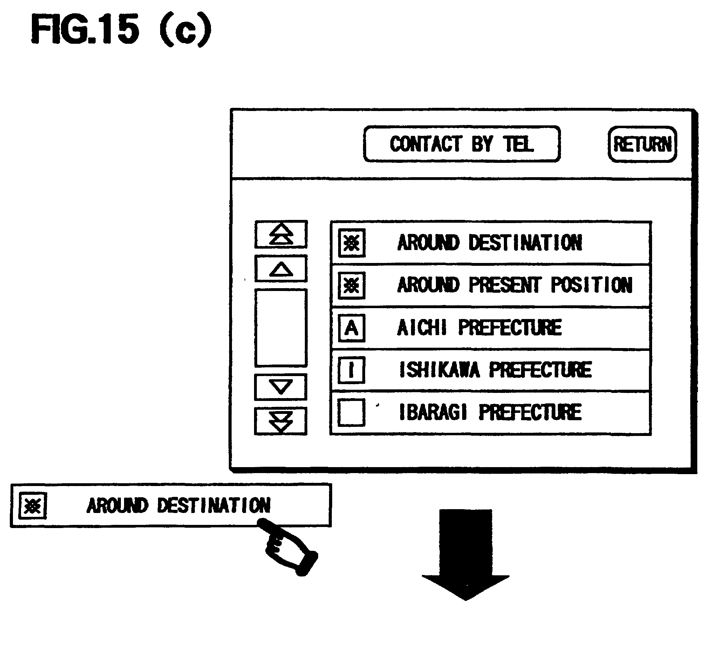

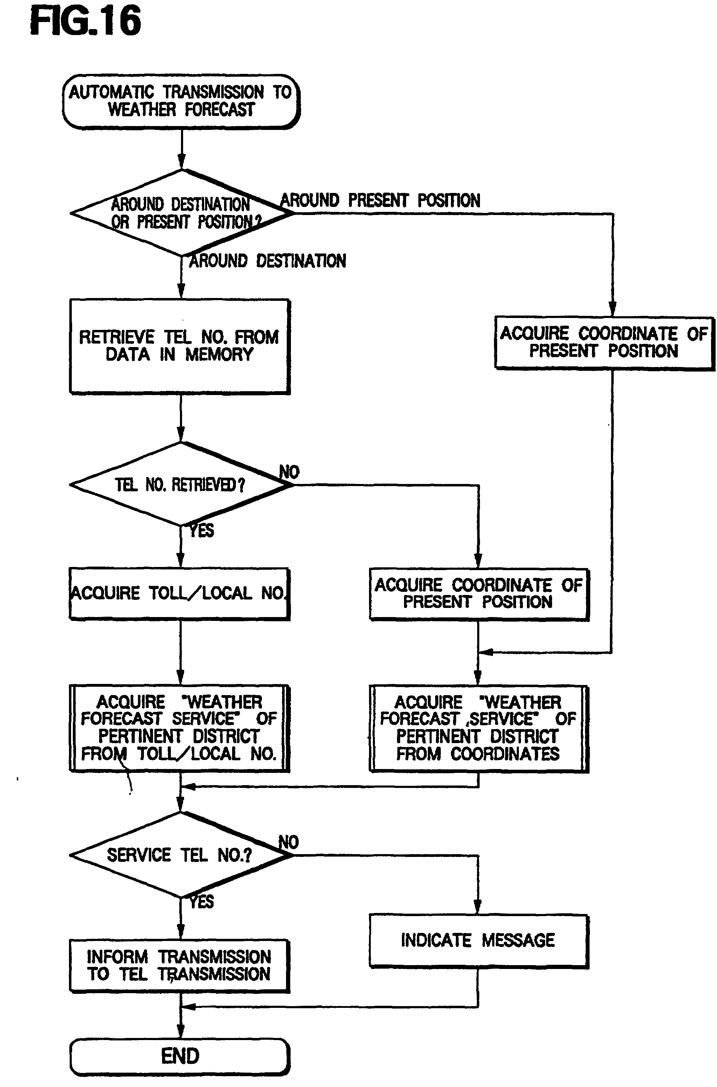

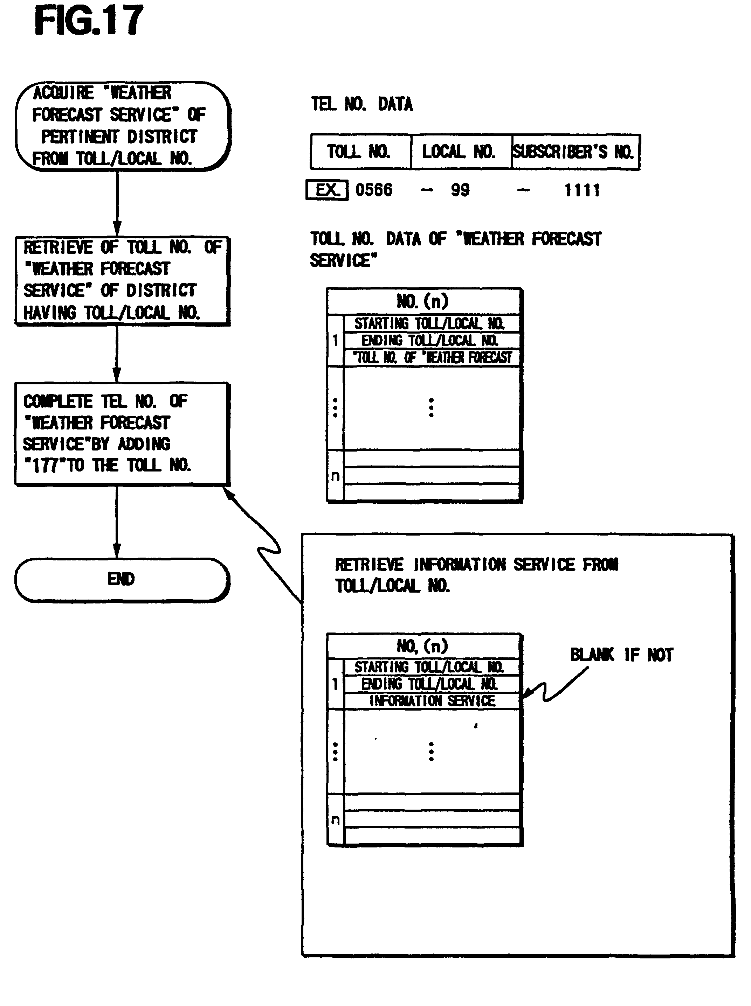

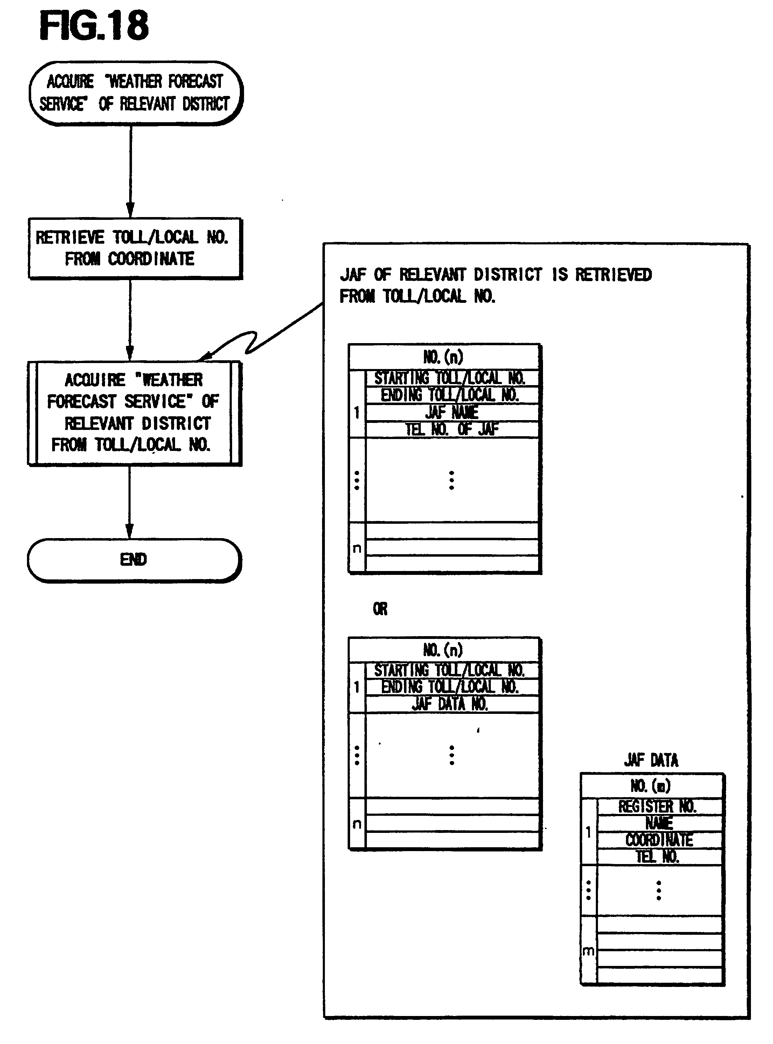

Figs. 14 (a) to 14 (d) are diagrams showing an example of the construction of data to be used for contacts - by - telephone of a weather forecast; Figs. 15 (a) to 15 (c) are diagrams showing an example of transition of screens for the automatic transmission of the weather forecast; Fig. 16 is a flow chart for explaining the automatic transmission routine of the weather forecast; Fig. 17 is a flow chart for explaining the acquisition of the "weather forecast service" from toll/local telephone numbers; and Fig. 18 is a flow chart for explaining the acquisition of the "weather forecast service" from coordinates.

The toll number data of the "WEATHER FORECAST SERVICE" is retrieved by keying the toll/local number and the coordinates. As a result, the retrieval data by the toll/local number has a the starting toll/local number, the ending toll/local number and the toll number of the "WEATHER FORECAST SERVICE" as shown in Fig.14 (a). If any relevant number is retrieved, the column of the toll number of the "WEATHER FORECAST SERVICE" is blanked. On the other hand, the retrieval data by the coordinates has a file of the north latitude data address with respect to the lower lefthand east longitude coordinates and the file of the toll/local number data with respect to the lower lefthand north latitude, as shown in Fig. 14 (b). These data are meshed at a constant interval, as shown in Fig. 14 (c), to convert the toll/local number of each mesh into data.

In the case of the automatic transmissions to the weather forecast, the "CONTACT-BY-TELEPHONE" is selected in the menu screen shown in Fig. 15 (a), for example, the contacts - by - telephone screen shown in Fig. 15 (b) is displayed. If the "WEATHER FORECAST SERVICE" of this menu is selected, the individual selection branches for specifying the periphery of the destination, the periphery of the present position, and the area, as shown in Fig. 15 (c). In the processing of the case in which of the periphery of the destination or the present position is selected, therefore, which of the periphery is examined, as shown in Fig. 16. In the case of the periphery of the destination, the telephone number is retrieved from the data file as in the automatic transmissions to the destination so that the toll/local number or the coordinates are acquired depending upon whether or not the telephone number is retrieved. From the toll/local number or the coordinates, the "WEATHER FORECAST SERVICE" of the corresponding area is acquired, the telephone number is sent as the notice of transmission independent upon whether or not the telephone number is retrieved, or the message of "No telephone number cannot be retrieved" is displayed at the center of the screen. In the case of the periphery of the present position, on the other hand, the point information of the present position is acquired from the present position detecting section 120, as shown in Fig. 13, by the sensor input interface 58 so that it is arithmetically operated by the CPU. Then, the positional coordinates are written in the RAM 153 to acquire the coordinates of the pre sent position, and the processings similar to the aforementioned ones are carried out from the coordinates. In the case of specifying the area, a city name or the like is sequentially specified from a prefecture name such as Aichi Prefecture, and the map of the desired area is displayed in the screen so that a point on the map is specified.

In casethe "WEATHER FORECAST SERVICE" number of a relevant district is to be acquired from the toll /local number, the number "177" is added to the toll /local number of the "WEATHER FORECAST SERVICE", as retrieved in Fig. 17, to prepare the telephone number of the "WEATHER FORECAST SERVICE". In case, on the other hand, the "WEATHER FORECAST SERVICE" number of the corresponding district is to be acquired from the coordinates, the toll/local number is retrieved from the coordinates, as shown in Fig. 18, to provide the "WEATHER FORECAST SERVICE" number of the district. The retrievals of the information service or the JAF number can be executed as in the acquisition of the "WEATHER FORECAST SERVICE" number.

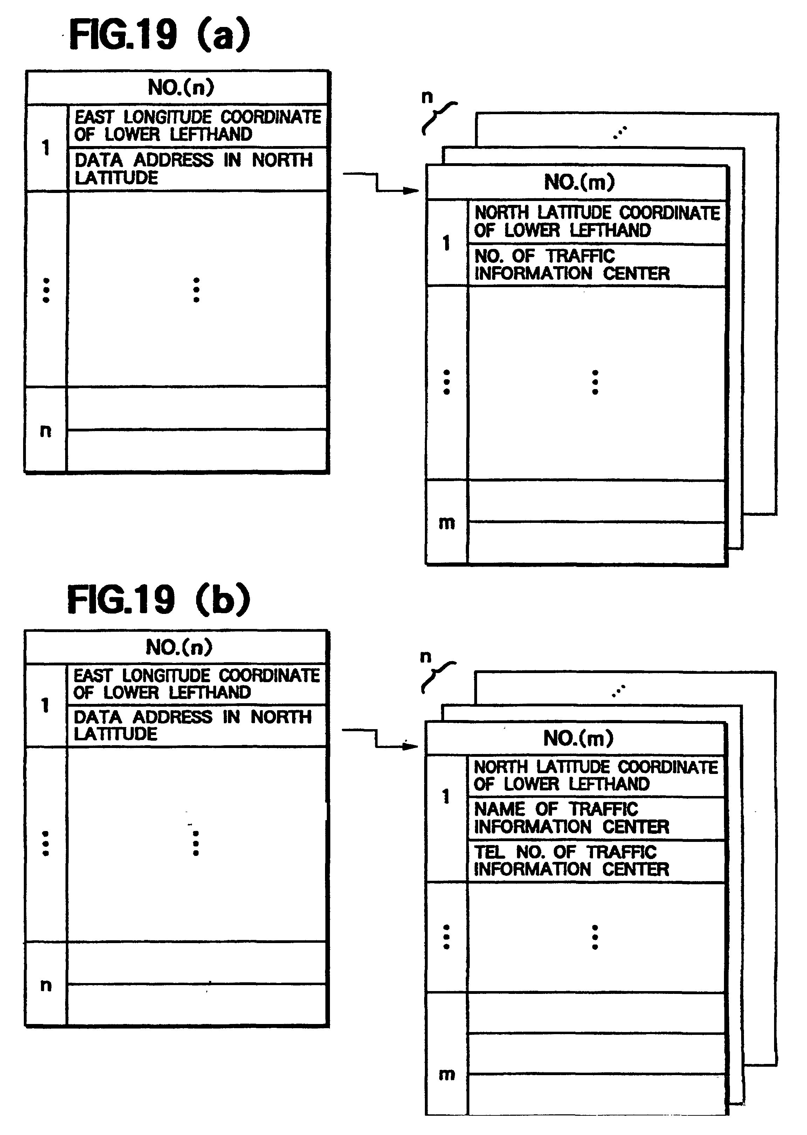

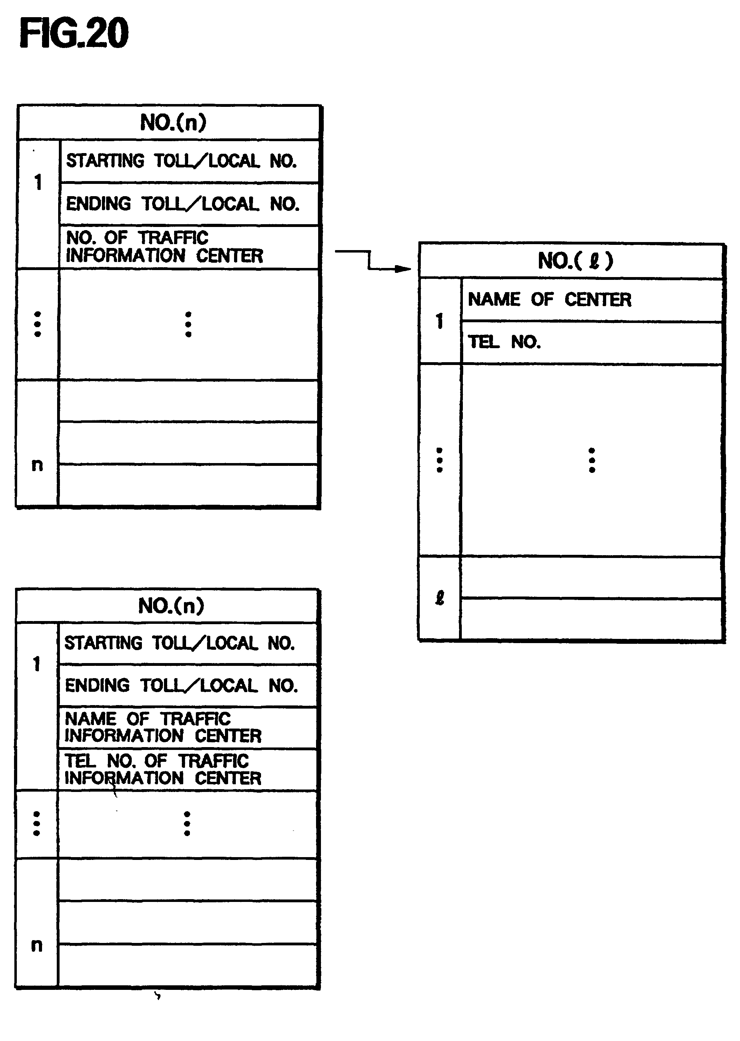

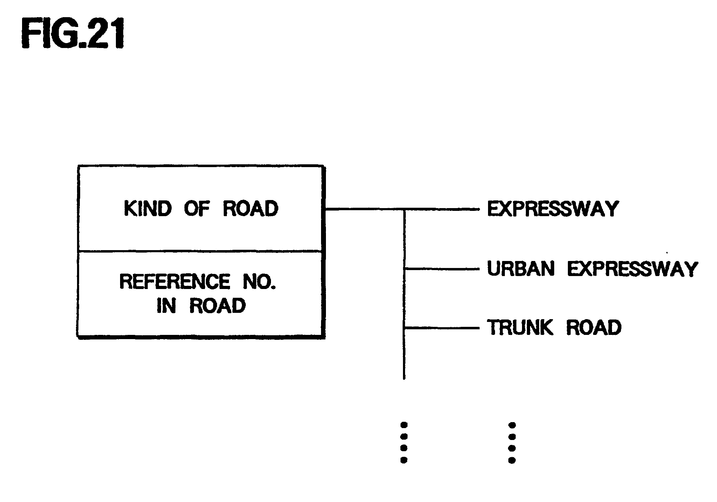

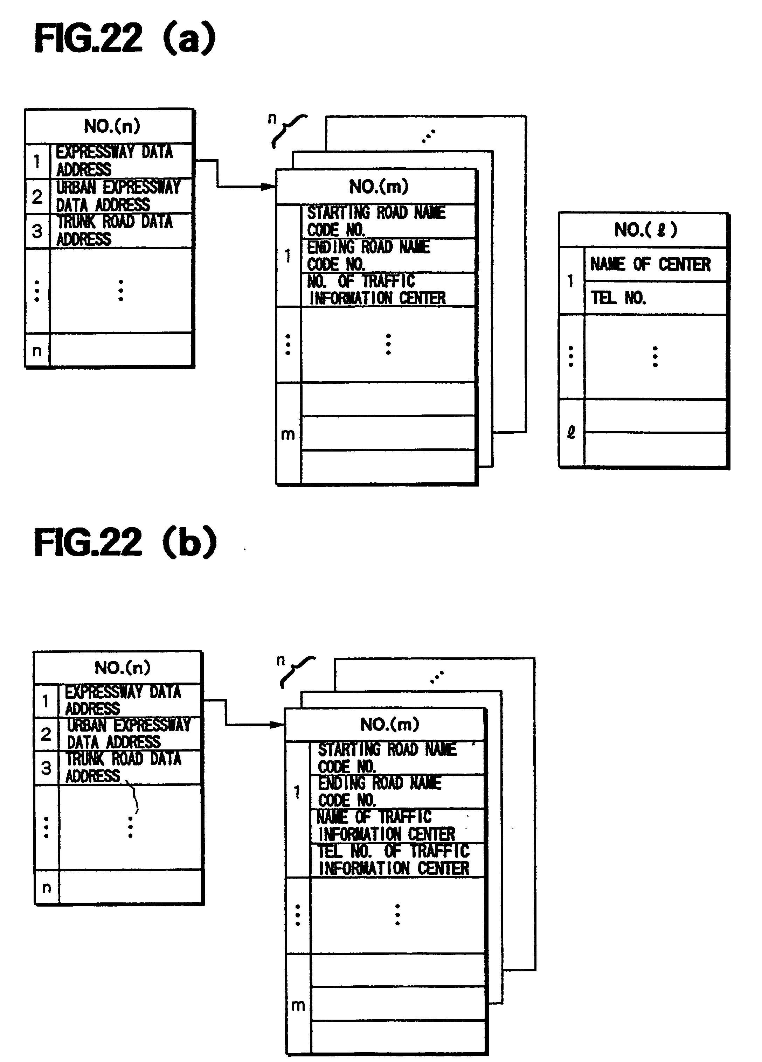

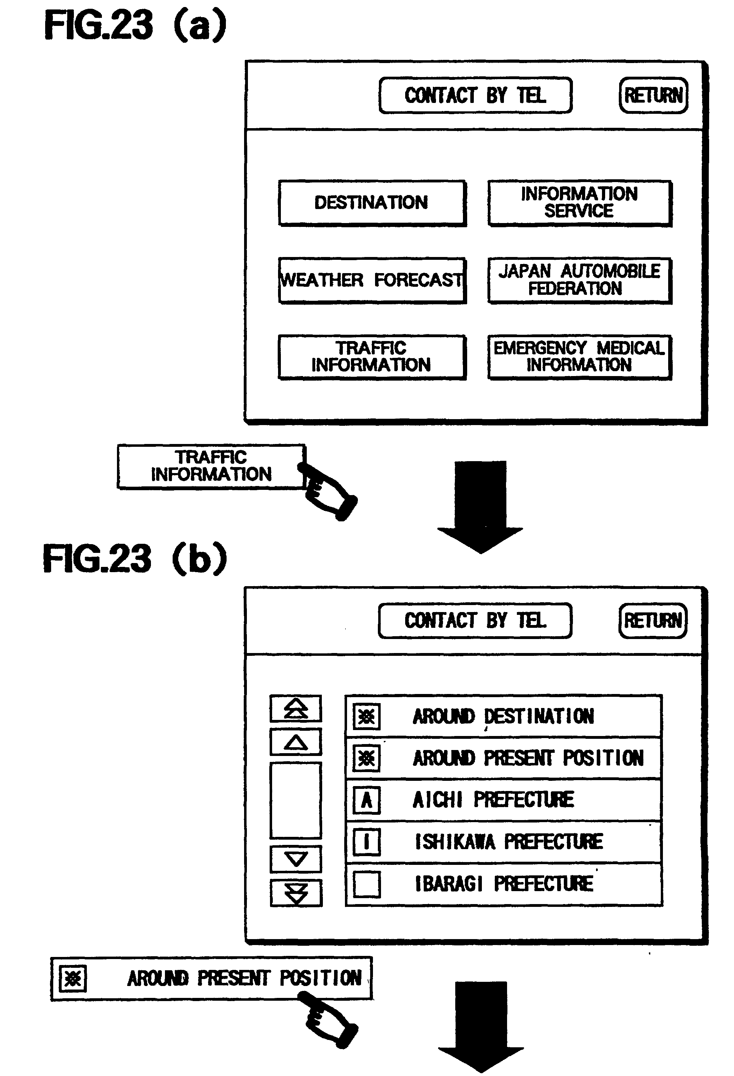

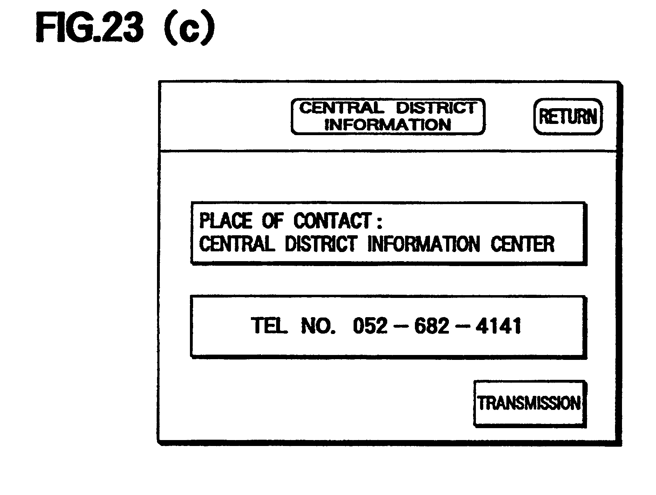

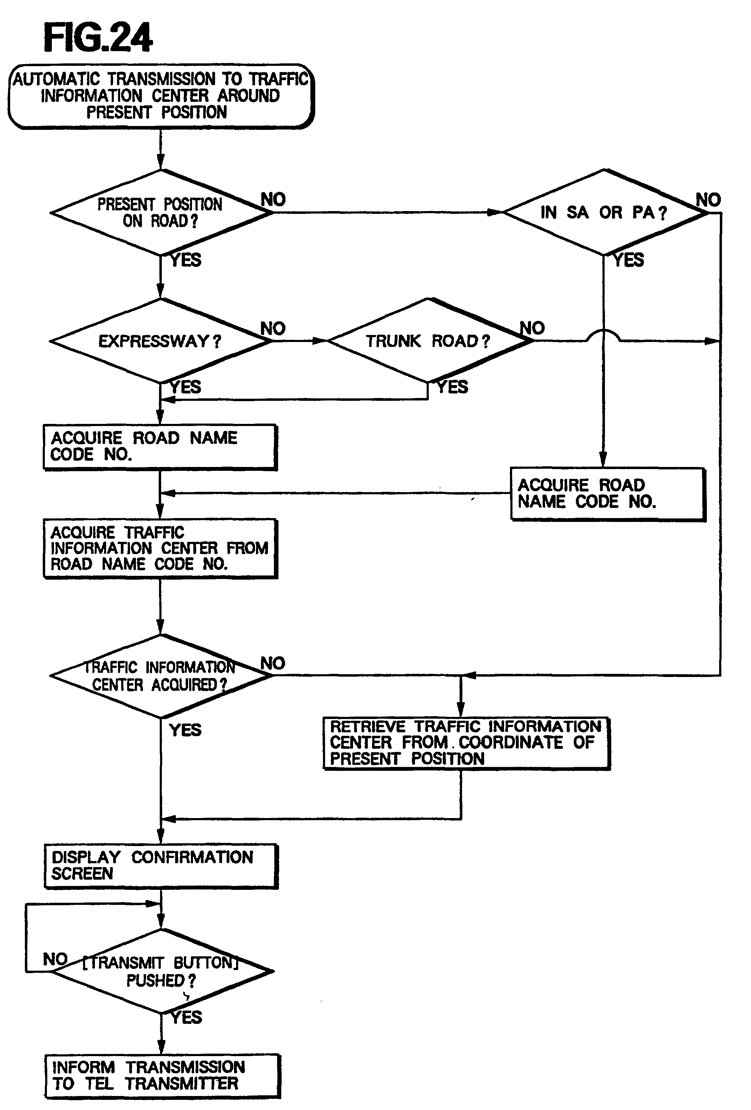

Of the data construction latched in the information memory section 130 shown in Fig. 13: Figs. 19 (a) and 19 (b) are diagrams showing an example of the construction of data to be used for retrieving a traffic information center from coordinates ; Fig. 20 is a diagram showing an example of the construction of data to be used for retrieving the traffic information center from a toll/local telephone number; Fig. 21 is a diagram showing an example of the construction of road name code number data; Figs. 22 (a) and 22 (b) are diagrams showing an example of the construction of data to be used for retrieving the traffic information center from the road name code number ; Figs. 23 (a) to 23 (c) are diagrams showing transitions of screens for transmitting traffic information automatically ; and Fig. 24 is a flow chart for explaining an automatic transmission routine of the traffic information.

The data to be used for the contacts by telephone of the traffic information are exemplified by that for retrieving the traffic information center from the coordinates (of the present position), as shown in Fig. 19, and that for retrieving the traffic information center from the toll/local number, as shown in Fig. 20, and that for retrieving the traffic information center through the kinds of road from the road name code No., as shown in Figs. 21 and 22. The data for retrieving the traffic information center from the coordinates is so constructed like the retrieval data of the "WEATHER FORECAST SERVICE" having been describ ed with reference to Fig. 14 (c) as to retrieve the No., name and telephone number of the traffic information center in terms of the north latitude coordinates of the lower lefthand from the east longitude coordinate of the lower lefthand through the north latitude data address. On the other hand, the data for retrieving the traffic information center from the toll/ local number is constructed to retrieve the No., name and the telephone number of the traffic information center in terms of the starting toll/local number to the ending toll/local number. The data for retrieving the traffic information center from the road name code No. is constructed to retrieve the name and telephone number of the center through the traffic information center No. from the information of the road kinds of expressway, urban expressway or trunk road of the road name code No. in terms of the starting road name code No. to the ending road name code No.

In the automatic transmissions to the traffic information center, the individual selection branches of the periphery of the destination, the periphery of the present position and the specified area are displayed in the screen, as shown in Fig: 23 (b). In case the periphery of the present position is selected, it is decided at first in terms of the coordinates obtained from the detection of the present position whether the present position is on the road, as shown in Fig. 24. If the answer is YES, it is decided which of the expressway, the trunk way or other ordinary road the present position is on, to acquire the road name code No. or the coordinates. If the present position is not on the road, the road name code No. is acquired if it is in a service area (i.e., SA) or parking area (i.e., PA), and otherwise the coordinates are acquired.

In case the road name code No. is acquired, the traffic information center is acquired from the road name code No., and a confirmation screen is then displayed. If not the traffic information center but the coordinates are acquired, the information center is retrieved from the coordinates of the present position so that the confirmation screen is displayed, as shown in Fig. 23 (c). The transmission key and the decision key are displayed in the confirmation screen. In case the transmission key is touched, the telephone number is sent as the transmission notice to the telephone transmitter. In case the decision key is touched, the previous screen is restored.

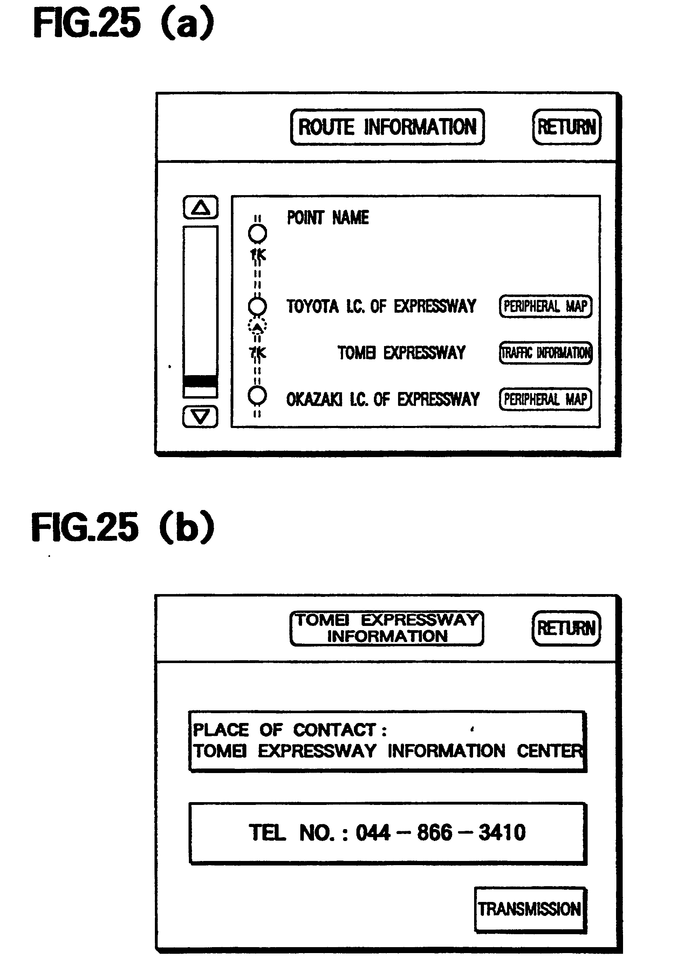

Figs. 25 (a) and 25 (b) are diagrams showing an example of screens for automatic transmissions of the traffic information of a route scheduled to pass during a route information display. Circles designate points which have names at their sideways, and road kinds are indicated between the points. Sideways of these, there are displayed keys for displaying the peripheral maps corresponding to the points. Sideways of the road kind, there is displayed a key for acquiring the traffic information. Arrows are keys for scrolling the list line by line. While this route information of Fig. 25 (a) is being displayed, the "TRAFFIC INFORMATION" key at the righthand side of the route to be passed is touched to display the contacts - by-telephone screen of Fig. 25 (b). If the transmission key is touched, the telephone number may be sent as the transmission notice to the telephone transmitter.

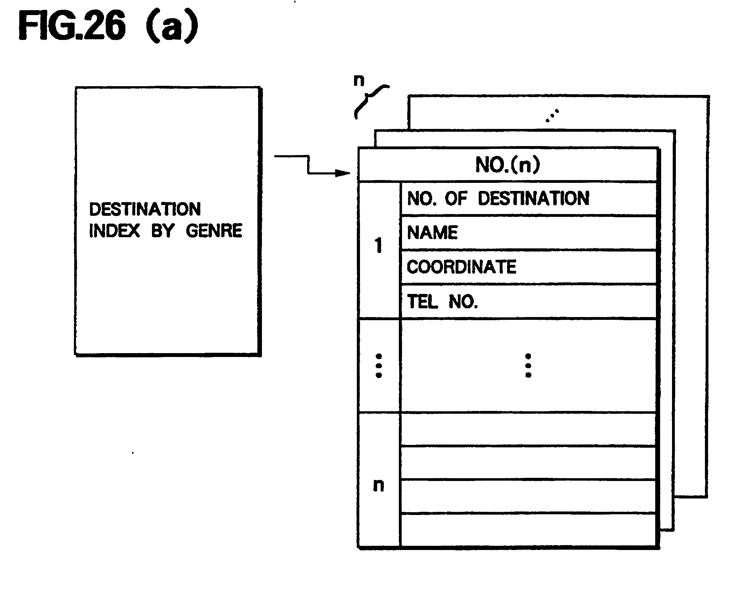

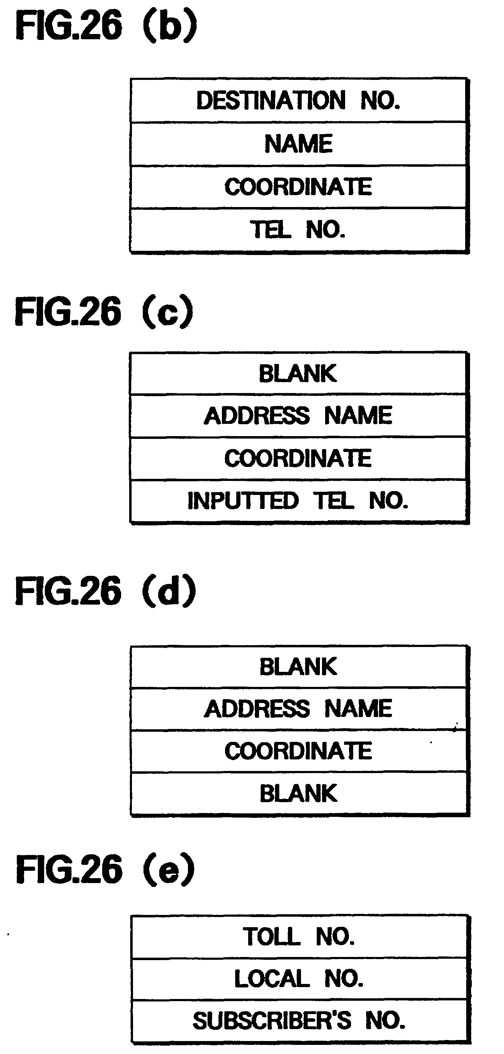

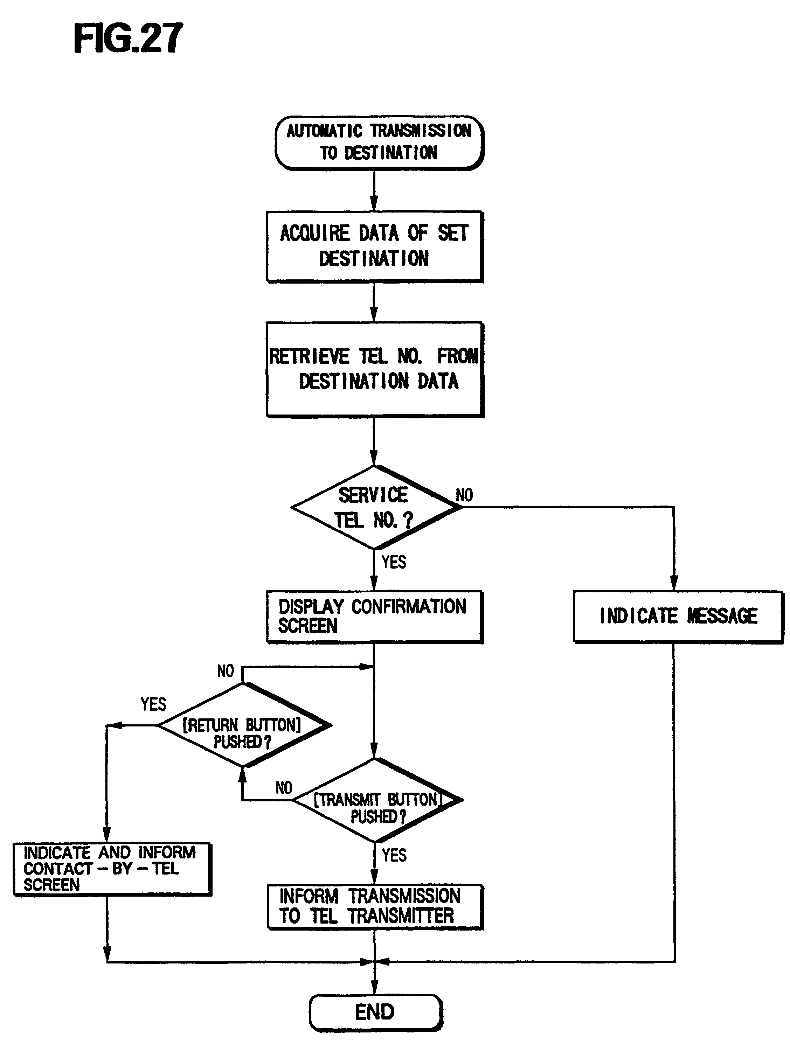

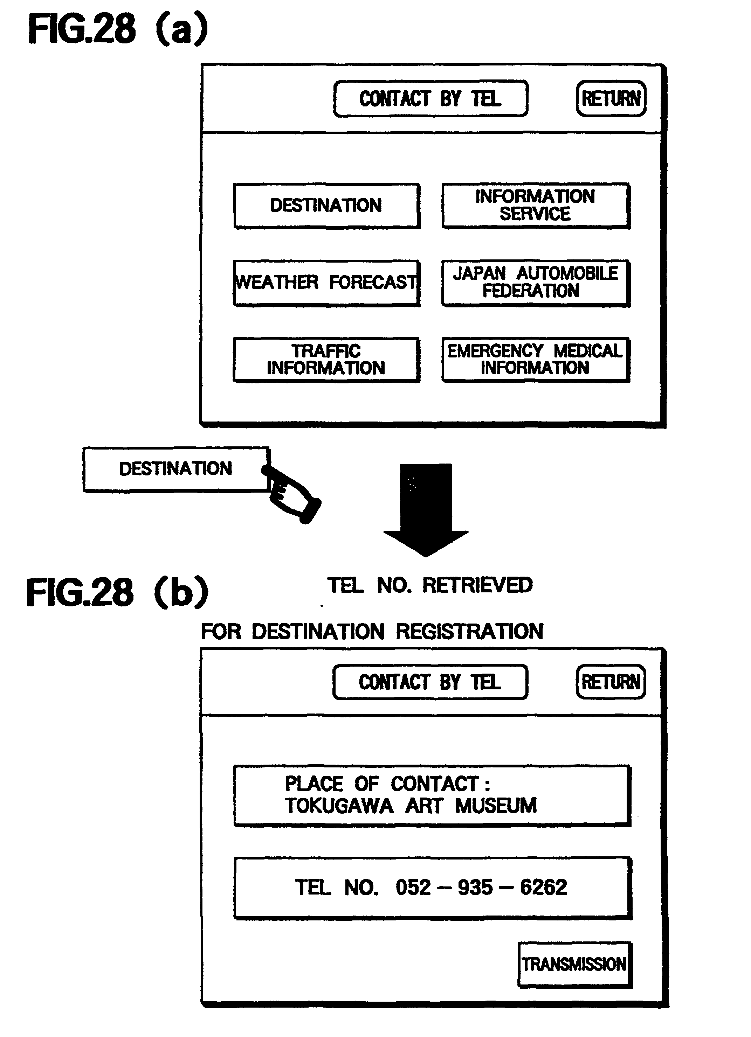

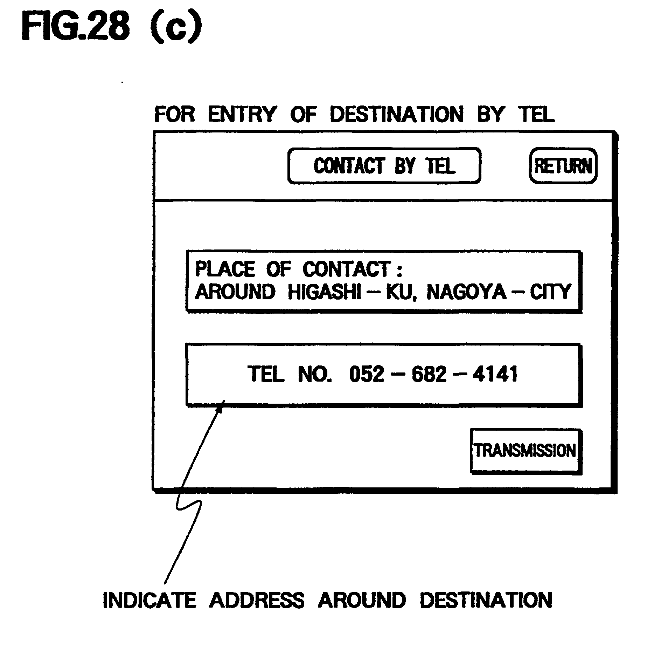

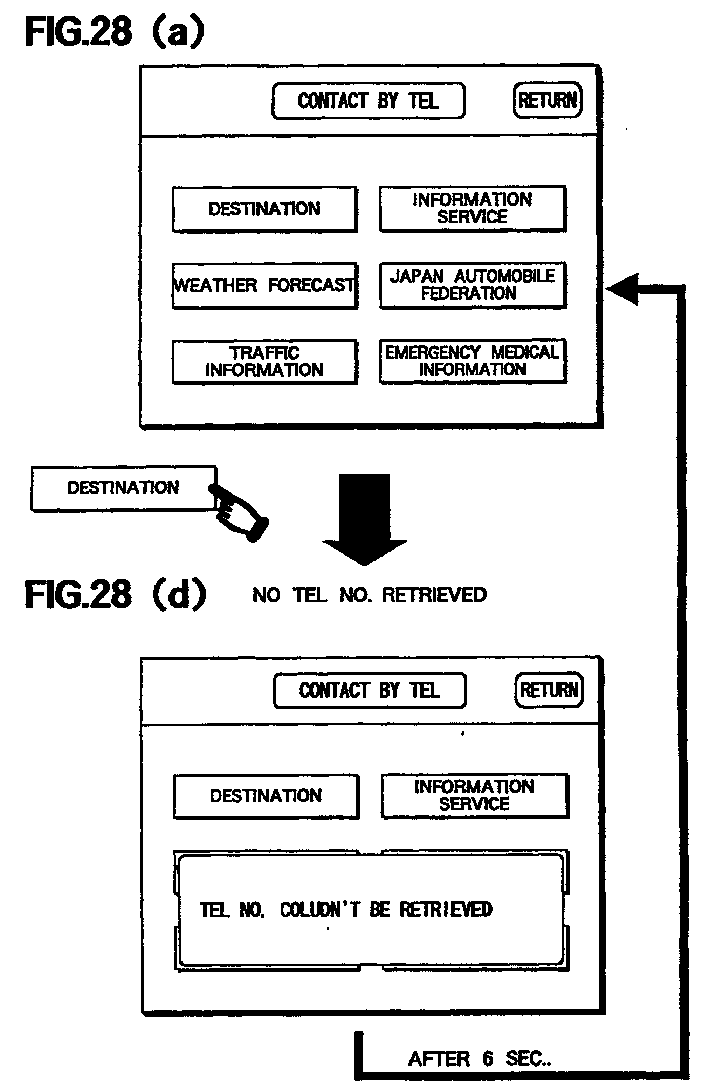

Figs. 26 (a) to 26 (e) are diagrams showing an example of the construction of data to be used for contacts - by - telephone of a destination ; Fig. 27 is a flow chart showing an example of transitions of screens for the automatic transmission to the destination; and Figs. 28 (a) to 28 (d) are diagrams for explaining the automatic transmission to the destination.

The setting of the destination is divided into the cases, in which the so - called "registered destinations" registered in advance in the recording medium are retrieved and set, in which the point is set by inputting the telephone number and by reading the map and in which the point is set by reading the map while specifying the area or the like. For these operations, all the destinations to be selected and specified are recorded as the registered destinations in the recording media such as the CD. This registered destination data is given as its data structure the destination index by genre, as shown in Fig. 26 (a), so that the desired destination may be easily retrieved by accessing it through the index. Moreover, each registered destination data is constructed of the number, name, coordinates and telephone number of the destination.

The destination data latched in the memory by setting the destination is: that extracted as it is from the registered destination data, as shown in Fig. 26 (b), if it is set from the registered destination; that having no destination number but composed of the address name of the vicinity, the coordinates and the inputted telephone number, as shown in Fig. 26 (c), if the destination is set by the telephone number inputting ; and that composed of the address name and the coordinates, as shown in Fig. 26 (d), if the destination is set by another method. The telephone number data held herein is composed of the toll number, the local number and the subscriber's number, as shown in Fig. 26 (e).

In the case of the automatic transmissions to the destination, therefore, the destination data, as set in Figs. 26 (b) to 26 (d), are acquired, as shown in Fig. 27, and the telephone number is retrieved from the destination data. As a result, in the case of Fig. 26 (b) or 26 (c) having the telephone number, there is displayed a confirmation screen having the place of contact (i.e., address name) and the telephone number, as shown in Fig. 28 (b) or 28 (c). In the case of Fig. 26 (d) having no telephone number, the message of " TEL No. couldn't be retrieved" is displayed at the center of the screen, as shown in Fig. 28 (d). In the confirmation screen, the transmission key and the decision key are displayed. The telephone number is sent as the transmission notice to the telephone transmitter, if the transmission key is touched, but the previous screen is restored if the decision key is touched.

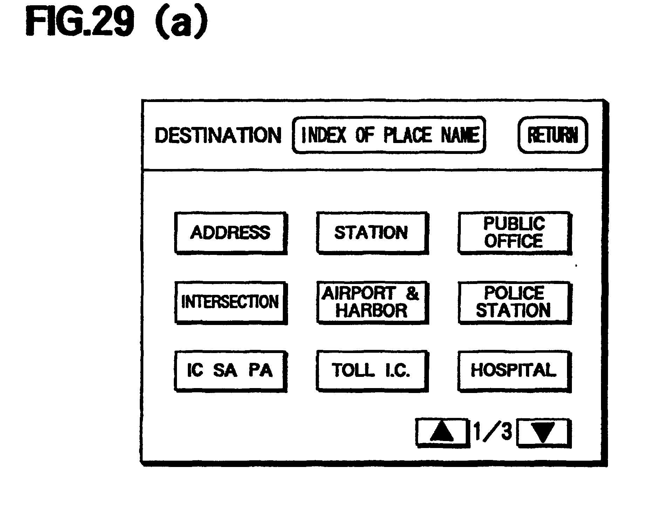

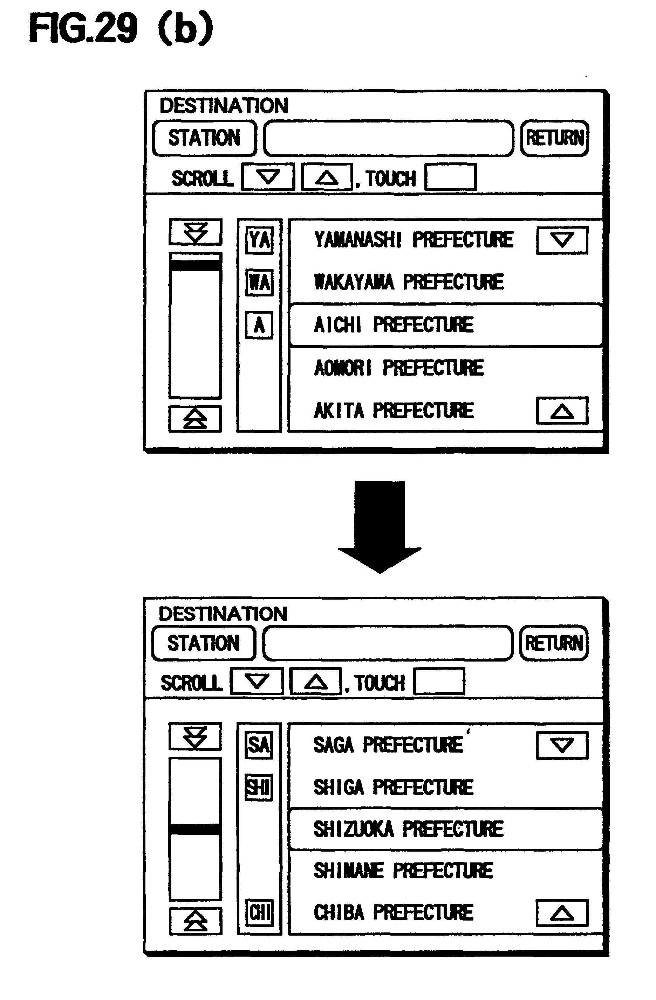

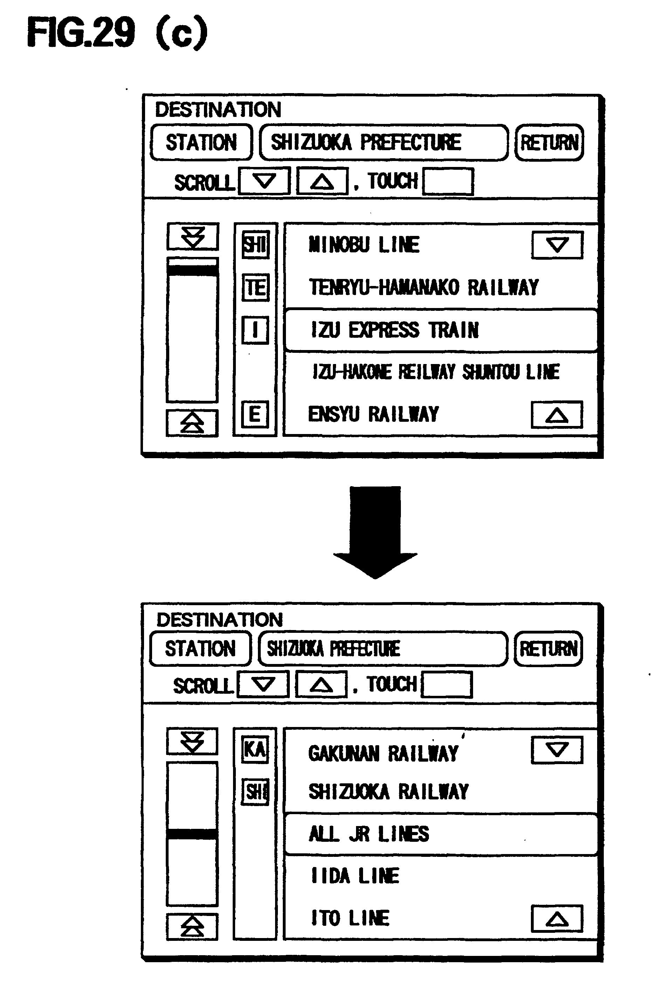

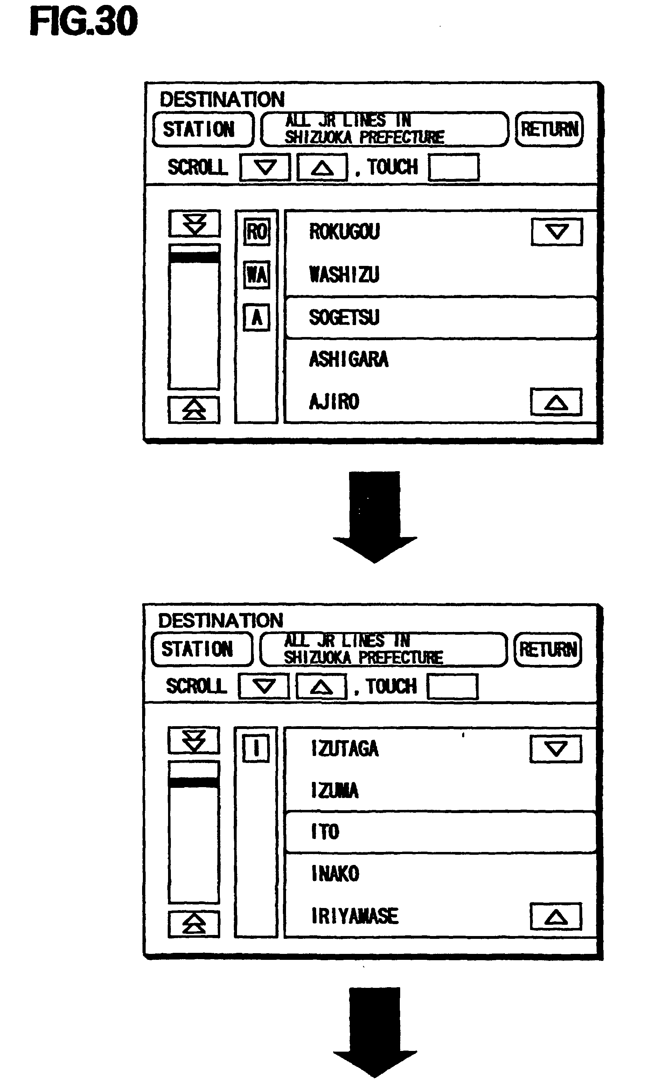

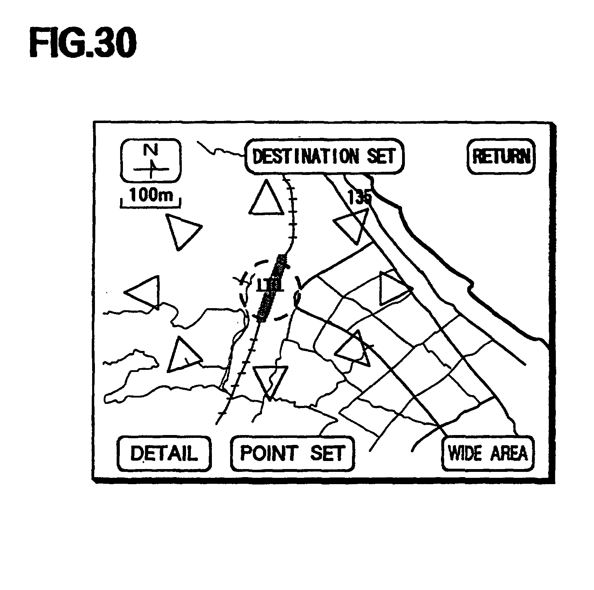

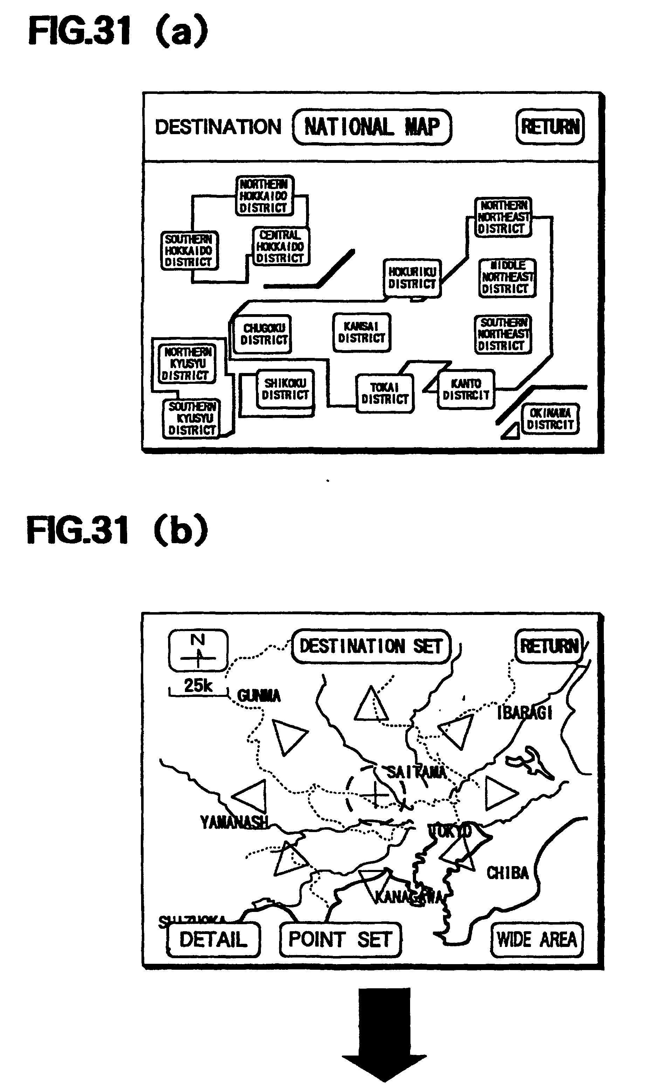

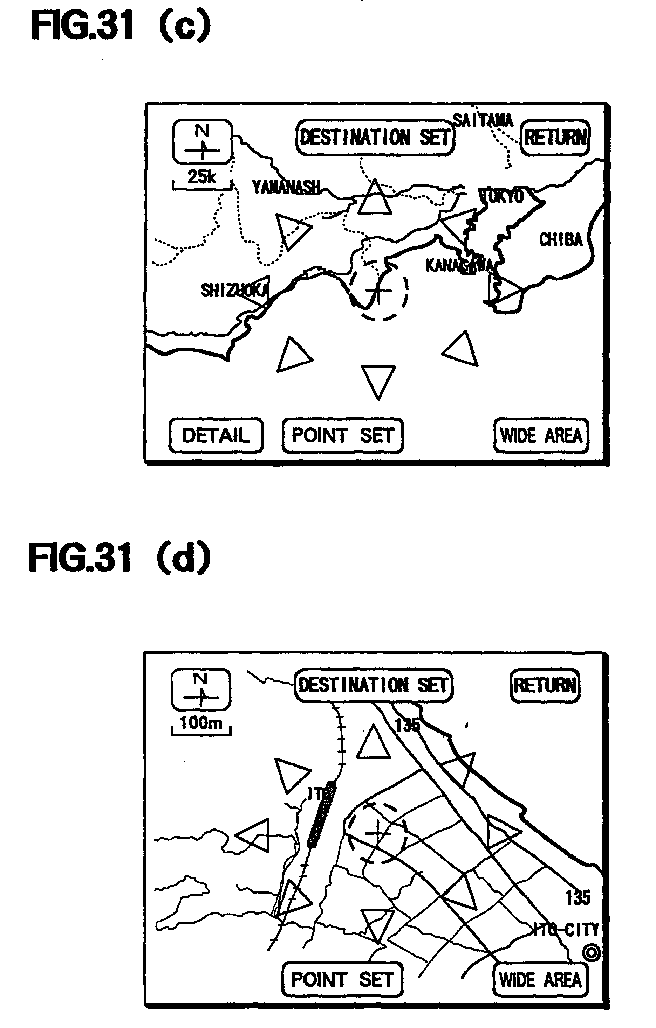

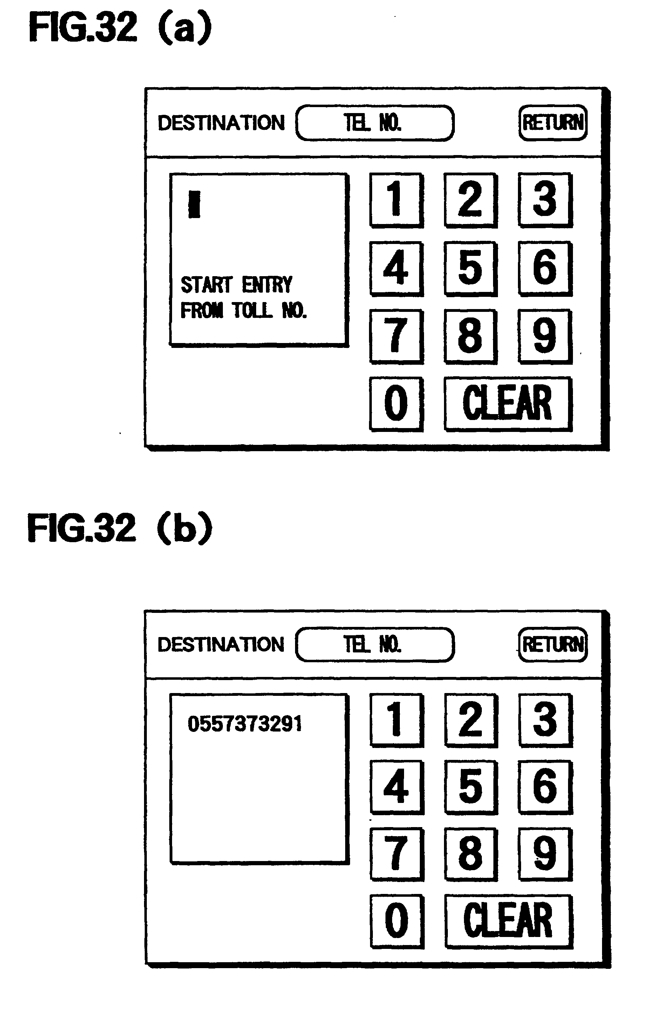

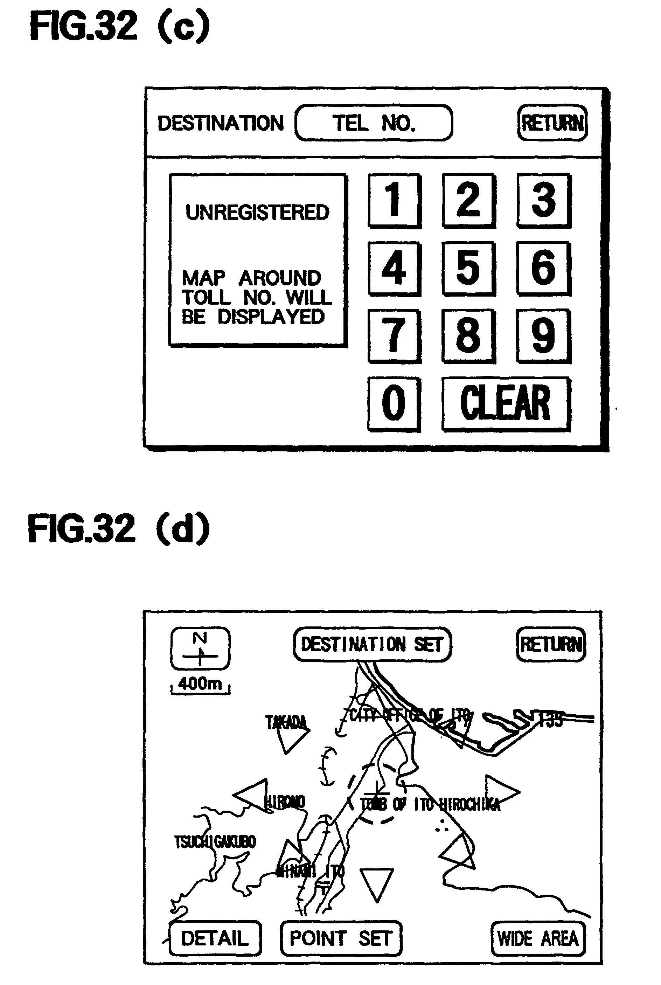

Here will be summarized the destination setting. Figs. 29 (a) to 29 (c) are diagrams showing an example of transition of destination setting screens by indexing the place name; Fig. 30 is a diagram showing an example of transition of screens till the destination is set; Figs. 31 (a) to 31 (d) are diagrams showing an example of transitions of destination setting screens by a national map; and Figs. 32 (a) to 32 (d) are diagrams showing an example of transitions of the destination setting screens by a telephone number.

Here will be described an example in which the "around Ito City of Shizuoka Prefecture" is to be set as the destination. When the destination setting switch B is pushed, as shown in Fig. 10, the screen of the display is changed to the destination setting screen shown in Fig. 12. As the individual buttons are to be touched in this screen to set the desired point, there is displayed a map which is more detailed than that of the scale of 1/80,000. Incidentally, the home and the memory point are registered in advance, and the periphery of the present position and the previous starting point can be respectively selected if the present position has been set and if the destination guide has been used.

In case the place name index is selected (or touched) on the screen, the screen is changed to the place name retrieval screen, as shown in Fig. 29 (a). Triangles on the screen designate keys for switching the lists, and "1/3" between the triangles indicates that the list is the first of the three. Here is shown in Figs. 29 (b) and 29(c) an example of screen transition in which after the station is selected the desired prefecture name list of Shizuoka Prefecture and the desired railway list of JR Line are sequentially set in the central frame. The screen is so controlled by those operations that when the station name list is displayed to set Ito Station, as shown in Fig. 30, the map near Ito City is displayed. In case the national map is selected, the screen is changed to the national map, as shown in Fig. 31 (a). If the selections are made Kanto Shizuoka around Ito City, the screens are changed from Fig. 31 (b) to 31 (d), and the map of 1/10,000 can be selected by pushing the "DETAIL" key. If the "TEL No." key is selected, the screen is changed to the telephone number screen, as shown in Fig. 32 (a). If the telephone number is then inputted from the toll number, as shown in Fig. 32 (b), the peripheral map of the local number can be displayed, as shown in Fig. 32 (d). The destination is set on the map of the periphery of the Ito City thus displayed.

As has been described hereinbefore, the navigation system having the automatic telephone transmitting function according to the present embodiment is constructed to include: memory means having divided areas for individually storing retrieving data of telephone numbers; telephone transmission means for transmitting the telephone number specified by the transmission notice ; specification input means for specifically inputting a key or a point on the screen of a display ; and retrieval processing means for retrieving the areas of said memory means on the basis of the specification information specified by said specification input means by displaying a specification information selecting screen in the display, to issue a transmission notice to said telephone transmission means by the telephone number of the area containing said specification information, whereby the area information is acquired from said specification information by selecting said specification information on the screen of the display. As a result, the driver is enabled to acquire the peripheral information of a desired point merely by simply touching the screen of the display with neither searching nor dialing the telephone number. Since, moreover, the telephone transmissions are carried out on the basis of the information stored in the memory, it is possible to accomplish the telephone transmissions to the weather forecast service, the JAF, the information service and the traffic information without fail. As a result, the dialing operations during the drive can be automated to allow the driver to concentrate the driving operation so that the driving safety can be improved.

The navigation system further includes: memory means for storing the data in which the telephone numbers are added to the registered places containing the destination; telephone transmission means for transmitting the telephone number specified by the transmission notice; and retrieval processing means for displaying the specification screen of the registered places on the display and for issuing the transmission notice to said telephone transmission means in terms of the telephone number of said registered place stored in said memory means on the basis of the registered place specified by a touch panel, whereby the telephone transmission is made to said registered place by specifying the registered place by the touch panel on the screen of the display. As a result, the telephone transmission can be accomplished merely by selecting the touch of the destination of transmission even for the destination, the transit point and the registered facilities. Even in case a contact is desired with the destination or transit point while the vehicle is running, a telephone call can be con veniently made.

Incidentally, the present embodiment should not be limited to the foregoing example but can be modified in various manners. Although the automatic transmission to the destination is acquired in the example by selecting the key of the destination, for instance, the user may register not only the destination but also a telephone number in the existing data base so that the user may be able to make an automatic transmission to the registered place. In this modification, the "DESTINATION" on the contacts - by - telephone screen may be changed to the "POINT SPECIFICATION" which can be selected to choose either the "DESTINATION" or the REGISTERED PLACE" thereby to retrieve it by genre or in the order of Japanese alphabets. Alternatively, the registered point may be indicated on the map, or the registered place list may be displayed and touched for the inputting. Moreover, the intermediate point on the displayed route or the route area may be specified. In the Information Guide Service or the Weather Forecast Service, furthermore, the coordinates may be inputted to retrieve the representative point of the area including the coordinate input point thereby to effect the automatic transmissions.

Although the transmission is instructed by com bining the touch panel on the screen of the display, the screen may indicate a cursor of arrow or the like, which may be operated or instructed by using a joy stick or a wireless controller or by inputting a voice through the voice recognizer 112.

Moreover, the present invention should not be limited to the navigation system equipped with a telephone but may be modified to display only the information on the periphery of the point. In this modification, the driver can access to the information on the periphery easily by a portable telephone or a pay telephone in view of the indicated telephone number.

Moreover, the present invention has been described as the vehicular navigation system throughout the embodiments but can naturally be likewise applied to the case in which it is used as the portable pocket type or note type navigation system for guidance of the route utilizing the means of transportation or for the sight-seeing guide. This navigation system covers not only the roads but also the means of transportation such as the streetcars, subways or buses as its route guide so that the stations are handled like the intersections of the roads. This application guides the setting of the destination as to what means of transportation the user should take, which station the user should transit and get off, and which way the user should walk. Moreover, the navigation system may be disposed at the center of a station or the like so that it may be used for the sight - seeing guide. In this application, the navigation system can be used for reserving or confirming the hotel by telephone or for setting the sight - seeing facilities as a transit point. Especially in a large city or sight - seeing resort having complicated means of transportation, the navigation system is useful for a foreigner and can be conveniently utilized for contacts to the destination.

As is apparent from the description thus far made, according to the present invention, the telephone number of the destination, the transit point or the registered facilities can be retrieved and automatically called by not inputting it directly but merely specifying the retrieval key and accordingly the information of the destination of transmission so that the automatic telephone transmission can be accomplished by the simple operations. Moreover, the telephone number transmitted is based upon the data base so that it is less mistaken. The destination of transmission having its telephone number determined for the area such as the Weather Forecast Service, the Traffic Information Service or the JAF can access a correct telephone number without any mistake in the area.

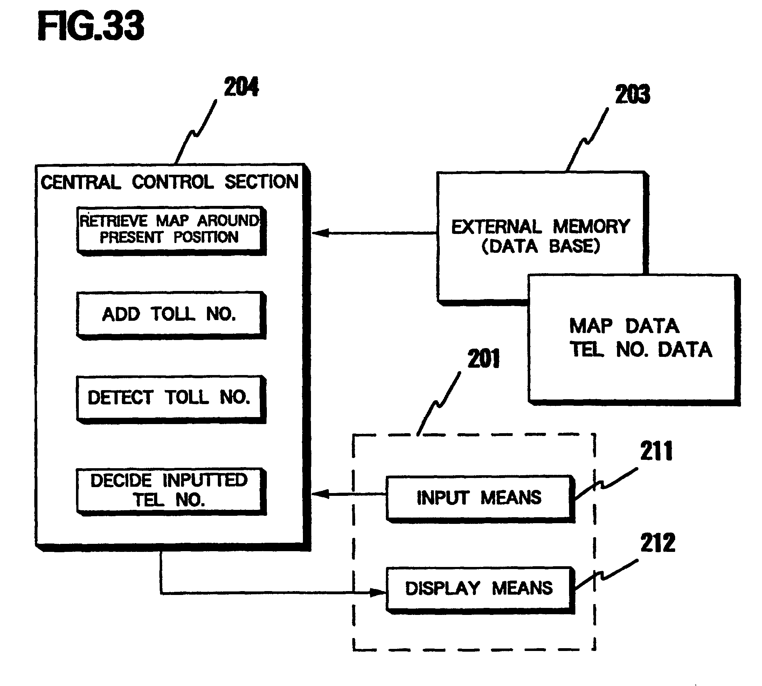

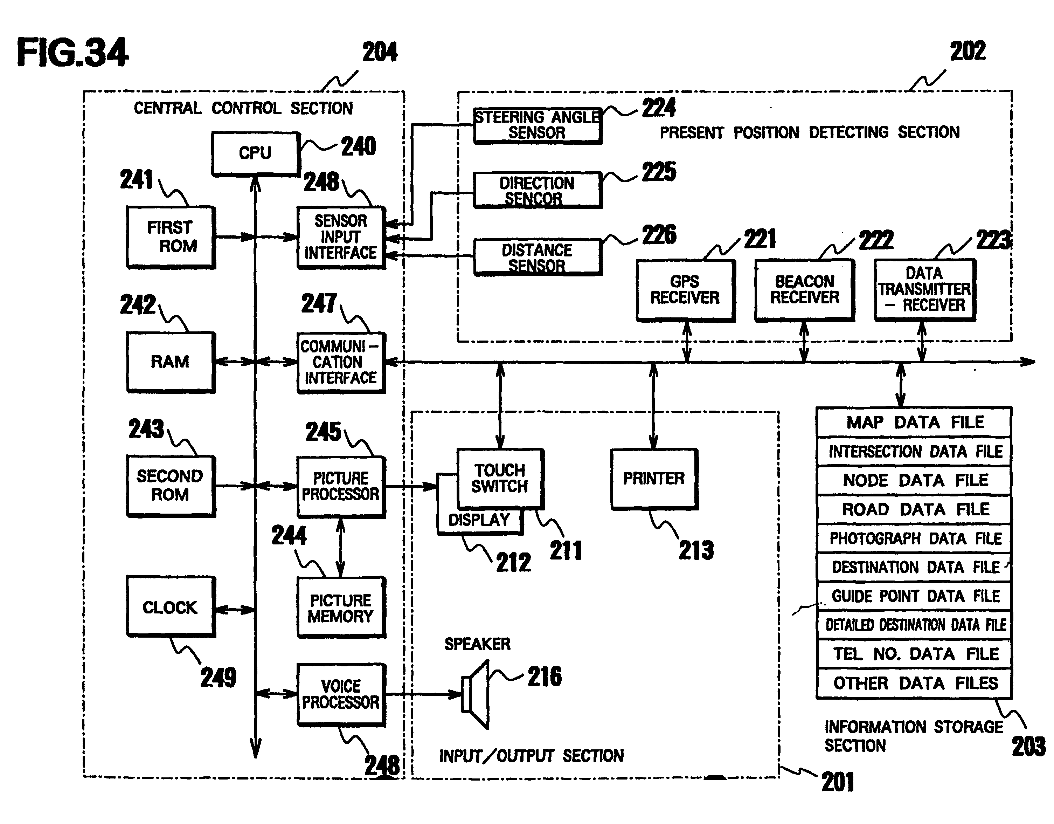

Here will be described with reference to the accompanying drawings an embodiment of the navigation system which has function to display the map of the periphery of a point by inputting the telephone number from a local number. Fig. 33 shows a hardware construction for realizing a function of a navigation system to display a local number inputting map in the area having the common local number. Fig. 34 shows a system construction of the navigation system having a function to display a map by inputting a local number after the toll number has been automatically retrieved from the present position.

The navigation system is constructed to include: an input/output section 201 for inputting/outputting the information on the route guide; a present position detecting section 202 for detecting the information on the present position of the vehicle of the user; an external memory section 203 recorded with navigation data necessary for calculating the route and the display guide data necessary for the guidance ; a central control section 204 for executing the route retrieval processing and the display guide processing necessary for the route guide and for controlling the entire system.

The input/output section 201 is given functions to input a destination, to instruct the central control section 204 to execute the navigation processing according to the will of the user, so that the guide information can be displayed by voices and/or on the screen when the driver desires, to output the processed data or the communication data to a printer or by voices to a speaker, and to output and display the same in the display. The input means for realizing the functions is composed of a touch panel 211 which is assembled in a display with touch switches for inputting the destination by the address, telephone number and coordinates or for requesting the route guide. On the other hand, the output means is composed of: the display 212 for displaying the input data on the screen and for displaying the route guide either upon a request of the driver or automatically ; a printer 213 for printing the data processed by the central control section 204 or the data stored in the external storage section 203; and a speaker 214 for outputting the route guide by voices.

Here, there can be added a voice recognizer for making the voice inputting possible or a card reader for reading out the data recorded in the IC card or the magnetic card. There can be further added a data communication system for transferring the data with the information source such as the information center, which is stored with the data necessary for the navigation to offer the data through communication lines upon a request of the user, or the electronic note which is stored in advance with the data intrinsic to the user such as the map data or the destination data.

The display 212 constitutes display means of a color CRT or a color liquid crystal display, and displays in colors not only all the screens necessary for the navigation such as the destination setting screen, the route guide screen, the section map screen, the intersection map screen or the retrieved point peripheral map screen based on the map data and guide data processed by the central control section 214 but also button switches in the screen for setting the route guide, for guiding the route guidance and for switching the screens. The route guide screen is equipped with at least the screens for displaying the whole route map, the route information and the peripheral map. The display 212 is equipped with the touch panel 211 corresponding to the display of the function buttons, so that the aforementioned operations may be executed on the basis of the signals inputted by touch ing the buttons. These buttons and touch panel 211 constitute the input means, the detailed description of which is omitted here.

The present position detecting section 202 is composed of : a GPS receiver 221 making use of the global positioning system (i.e., GPS) ; a beacon receiver 222 ; a data transmitter - receiver 223 for receiving the corrected signals of the GPS by using the cellular phone or FM multiplex signals ; a steering angle sensor 224 exemplified by a wheel sensor or a steering sensor ; an azimuth sensor 225 exemplified by a magnetic sensor; and a distance sensor 226 for detecting the covered distance in terms of the R.P.M. of the wheels.

The external storage section 203 is a data base which is stored with all the data necessary for the route guide, such as maps, intersections, nodes, roads, photographs, destinations, guide points, detailed destinations, telephone numbers, branching points, display guides and voice guides. The telephone number data file related to the map data file is also stored as the map information of the point periphery to be retrieved by inputting the local numbers, as is necessary for practicing the present invention.

The central control section 204 is composed of: a CPU 240 for executing arithmetic operations ; a first ROM 241 stored with not only programs for processing a route retrieval, for a display control necessary for the route guide and for a voice output control for a voice guide but also data necessary for the programs ; a RAM 242 for temporarily storing the route guide information retrieved and the data being arithmetically processed; a second ROM 243 stored with display information data necessary for the route guide and the map display ; a picture memory 244 stored with picture data to be used for the screen display ; a picture processor 245 for fetching the picture data from the picture memory on the basis of a display control signal coming from the CPU to process the picture data and output the processed data to the display; a voice processor 246 for synthesizing and converting the voice, phrase, one sentence and/or sounds read out of the information storage section 203 on the basis of a voice output control signal coming from the CPU into analog signals to output these signals to the speaker; a communication interface 247 for transferring the input/output data through communications; a sensor input interface 248 for fetching the sensor signal of the present position detecting section; and a clock 249 for wiring a data and a time in the internal diagnosis informa tion.

The present system is constructed so that the driver can select the route guide from the screen display or the voice output.

In the present system, moreover, the present position is determined by calculating an estimated position on the basis of the various sensor signals coming from the present position detecting section and the GPS data, by determining the position on the road from the correlations among the estimated position, the road on the map and the GPS data.

Furthermore, the present system is given a function to decide whether or not the present position is approaching a guide point predetermined with respect to the position of the line of the vehicle, in view of the path to the destination. Specifically, thanks to the aforementioned function, there are decided the timings for automatically outputting voices of the predetermined distance at this side of the intersection on the guide route or the decision of the transit of the intersection and for outputting the display of the intersection information such as the name of the transit intersection. On the basis of this decision, the guide is instructed to the picture processor and the voice processor. When the request signal is in putted, the voice processor is instructed to guide the present position in voices.

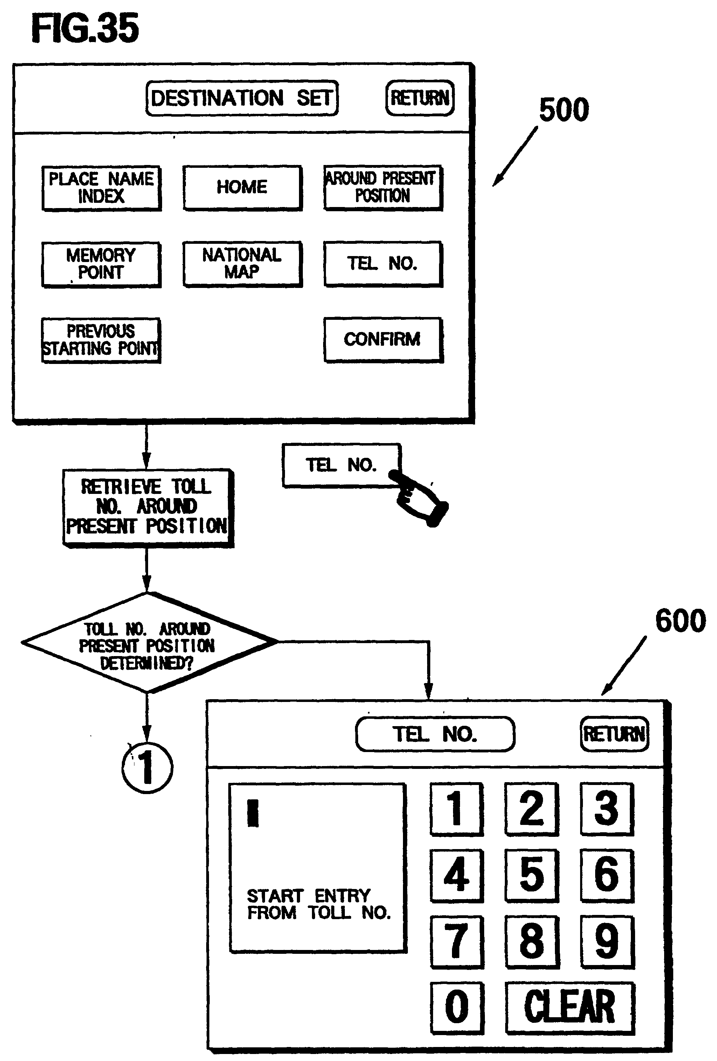

Here will be described the display processing of the map of the periphery of the point. Fig. 35 is a block diagram showing a routine of displaying a map around the present position by inputting a local telephone number in accordance with an embodiment of the navigation system of the present invention. In the present embodiment, a relevant local telephone number is acquired by dividing blocks by toll numbers on the basis of the map data and by retrieving the block containing the present position from the east longitude and north latitude of the present position acquired from the present position information.

In case the map around the point such as the present position is to be displayed from the telephone number, the "TEL No." is selected in a destination selecting screen 500. Then, the map data and the telephone number data are fetched from the external storage section on the basis of the present position information of the vehicle sent from the present position detecting section, and the toll number of the present position is retrieved. In case the toll number of the present position is fixed from the detection result, a telephone number input screen 700 dis playing a toll number is opened. If, on the other hand, the toll number is not fixed, a telephone number input screen 600 having no toll number displayed is opened.

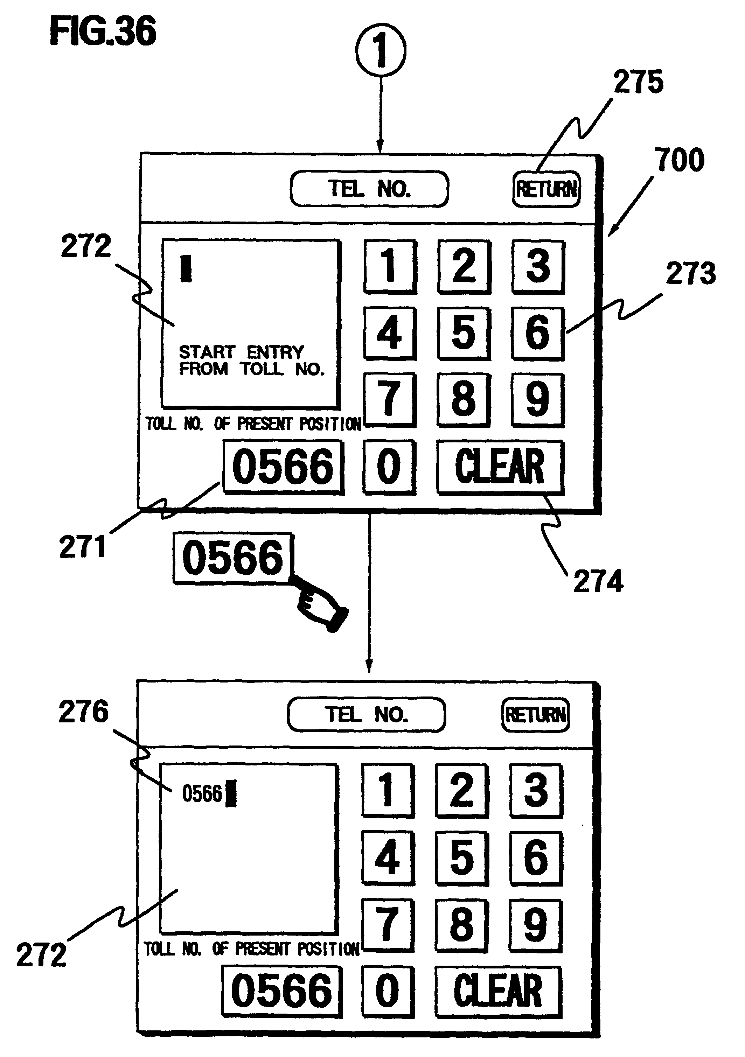

In case the toll number could not be fixed, the telephone number input screen 600 having no toll number display is opened, and the telephone number is inputted therein from the toll number. In case the toll number could be fixed, the telephone number is inputted through the telephone number input screens of Figs. 36 to 38. In case the telephone number is inputted from the local number, the toll number of the periphery of the present position is displayed by the touch switches and is inputted by a single action if it is common. Specifically, the telephone number input screen 700 having the toll number display is equipped, as shown in Fig. 36, with: a toll number display input portion 271 for displaying the retrieved toll number and for inputting the toll number by touching the display portion : a telephone number display portion 272 for displaying the message of instructing the entry from the toll number and the telephone number inputted in the cursor position ; ten keys 273 for inputting the telephone number ; a clear button 274 for canceling the telephone number inputted ; and a return button for returning the screen to the destination setting screen. If the toll number displayed in this screen is correct, the toll number 276 is displayed in the telephone number display portion 272 by touching the display portion of the toll number display input portion 271, and the cursor is moved to the input position of a subsequent local number. In the present embodiment, the toll number "0566" is displayed, and this telephone number is displayed in the telephone number display portion 272 after the display portion has been touched.

After the telephone number has been inputted, the name of the destination is displayed, if the inputted number belongs to the destination data, and the map of the periphery of the destination is displayed. If, on the other hand, the inputted number does not belong to the destination data, there is displayed the map of the periphery of the point representing the toll/local number inputted.

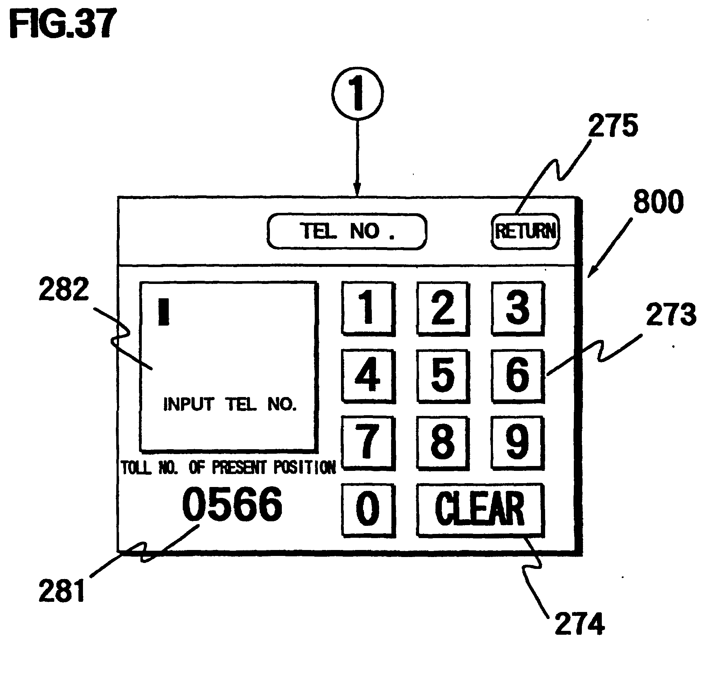

Fig. 37 shows a telephone number input screen for inputting the telephone number from the toll number. The present embodiment is constructed such that the telephone number is inputted from the toll number after the toll number retrieved has been confirmed by the display. Incidentally, the telephone number input screen is basically identical to that shown in Fig. 36 so that its description will be suitably omitted by designating the components having identical functions at the common reference numerals.

A telephone number input screen 800 is equipped with a toll number display portion 281 for displaying the toll number of the present position retrieved. When the toll number is inputted by the ten keys after it has been confirmed from the display of the toll number display portion 281, the telephone number is displayed in a telephone number display portion 282 from its toll number.

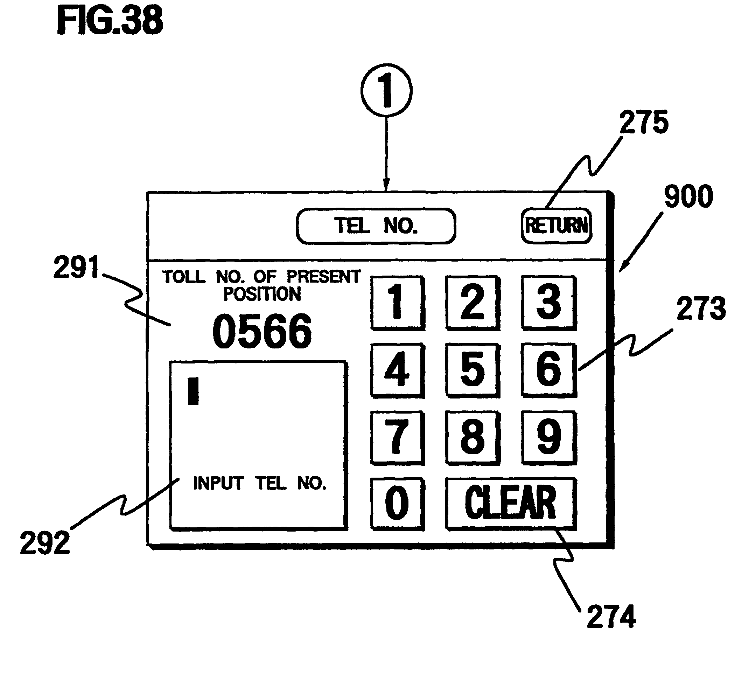

Fig. 38 shows a telephone number input screen for inputting a telephone number from its local number. The present embodiment is constructed such that the telephone number is inputted from its local number after its retrieved toll number has been confirmed in the display. Incidentally, the telephone number input screen is basically identical to that shown in Fig. 36 so that its description will be suitably omitted by designating the components having identical functions at the common reference numerals.

A telephone number input screen 900 is equipped with a toll number display portion 291 for displaying the toll number of the present position retrieved. When the toll number is inputted by the ten keys after it has been confirmed from the display of the toll number display portion 291, the telephone number is displayed in a telephone number display portion 292 from its toll number.

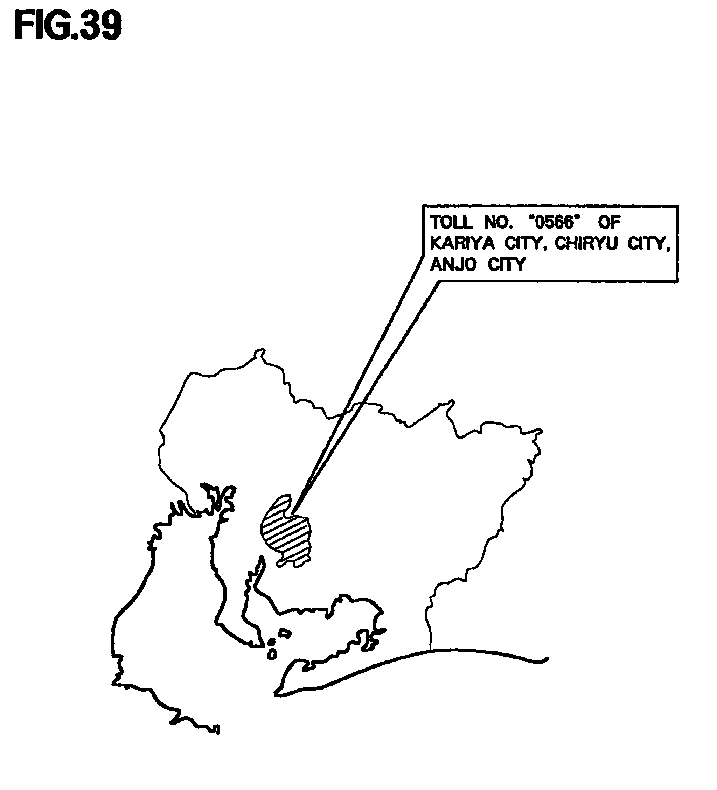

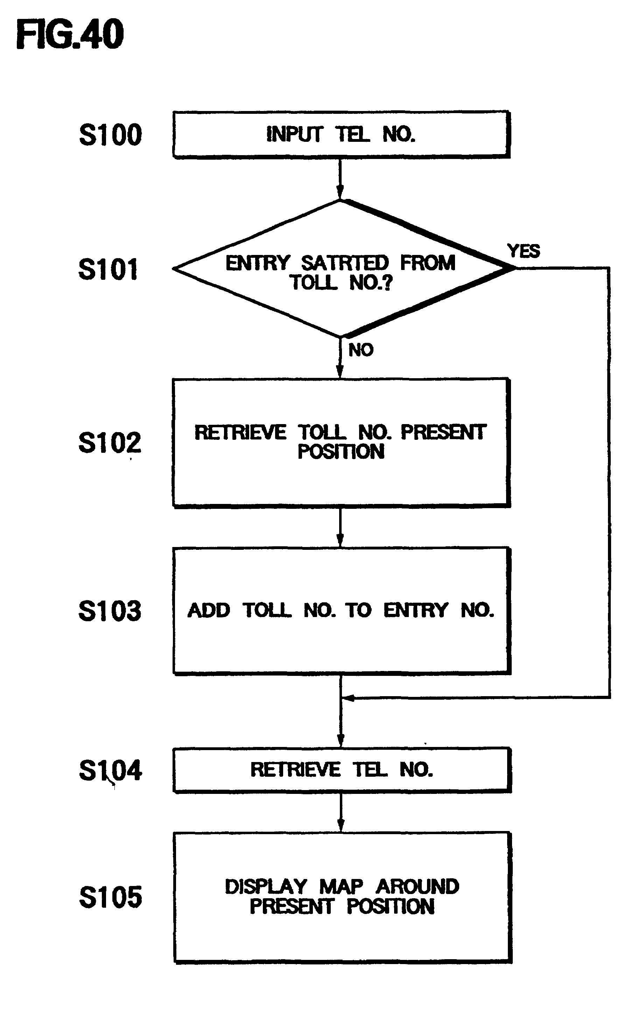

Here will be described a specific example of. the display processing of the map around the present position according to the present embodiment. Fig. 39 shows a map displaying an area having a toll number of "0566" (as covers Kariya City, Chiryu City and Anjo City). Fig. 40 is a flow chart showing a routine of displaying the map around the present position.

If the "TEL NO. INPUT" is selected in the destination setting screen, the telephone number inputting screen is opened, and the telephone number is inputted (at S100) according to the instruction of the message on the screen. It is decided (at S101) on the basis of the telephone number inputted whether or not the input is from the toll number. If the answer is YES, the map is retrieved by the telephone number. If, on the other hand, the input is from the local number, the toll number is retrieved from the present position (at S102). The input telephone number is added to the retrieved toll number (at S103), and the map is retrieved on the basis of the telephone number (at S104). Then, the picture of the peripheral map of the retrieved point is processed and displayed on the display (at S105). In case the present position is located at Anjo City, for example, the telephone number "761111" is inputted. Then, after the toll number has been retrieved, the toll number "0566" of the Anjo City is added so that the telephone number "0566761111" of the retrieved point is fixed. The map is retrieved on the basis of the telephone number. If this telephone number is registered, the peripheral map of the point is displayed.

As has been described hereinbefore, according to the present embodiment, the telephone number decision means decides whether or not the telephone number inputted by the telephone number inputting means has a toll number. If the answer is NO, that is, if the telephone number is inputted from the local number, the toll number detecting means detects the toll number on the basis of the information of the present position. Then, the toll number adding means adds the toll number detected by the toll number detecting means to the telephone number inputted by the telephone number inputting means. The point peripheral map processing means retrieves the map on the basis of either the telephone number inputted from the toll number or the telephone number having the toll number added thereto and displays the retrieved map in the map display means. As a result, the map can be displayed by inputting the number from the local number to reduce the number of figures to be inputted and to widen the range of using the function to display the map from the telephone number. In case, on the other hand, it is known that the toll number of the telephone number to be inputted is identical to the toll number of the present position, what is inputted is only the local number so that the number of inputting operations can be reduced. Since, moreover, the toll number of the present position is displayed, it is known at its inputting time. In case, on the other hand, the present position is in the vicinity of the boundary of the block of the toll number, a number different from the toll number to be inputted may possibly be added. However, the toll number obtained' from the present position information is displayed in advance so that it can be clarified and easily inputted. Since, moreover, the toll number obtained from the present position information is displayed explicitly and in the form of the toll number switch, it can be inputted by the single action, if it is identical to the toll number to be inputted, so that the number of inputting operations can be reduced.

## Claims

1. A navigation system comprising:
a) storage means containing map data (1) and at least one list (2, 7) for storing telephone numbers and positional coordinates in a corresponding manner,
b) telephone number input means (3) for inputting a telephone number,
c) point setting means (8) for setting at least one desired point on a map with user's operation, and
d) retrieval means (6) being capable of retrieving a set of data of telephone numbers and positional coordinates having a corresponding relationship.
**characterized by**
e) control means (50) for registering in said list (2, 7) the telephone number inputted by said telephone number input means (3) and the positional coordinates of said point set by said point setting means (8) in a corresponding manner

2. The system according to claim 1, further comprising display means (4) for displaying the map after reading said map data on the basis of said positional coordinates.

3. The system according to claim 2, wherein said display means (4) displays the map after reading said map data in terms of the coordinates of a representative point of the area code of the telephone number if it is decided by the retrieval means (6) that said inputted telephone number is not in said storage means.

4. The system according to any of claims 1 to 3 wherein said storage means includes: a first list (2) having in advance telephone numbers and positional coordinates corresponding to said telephone numbers, and a second list (2, 7) having positional coordinates corresponding to the telephone numbers which are registered by the user in said storage means.

5. The system according to claim 4 wherein said control means (50) registers the telephone number inputted by said telephone number input means (3) and said positional coordinates of the point set by said point setting means (8) in a corresponding manner in said second list (2, 7), respectively, if it is decided by said retrieval means (6) that said inputted telephone number is not in said list (2, 7).

6. The system according to any of claims 1 to 5 wherein said storage means comprises a programmable data construction.

7. The system according to any of daims 1 to 6 further comprising point coordinate setting means (9) for setting the positional coordinates set by said point setting means (8) as point coordinates for performing guidance, said system being for guiding on the basis of said point coordinates.

8. A method of using a navigation system comprising the steps of:
a) inputting a telephone number,
b) retrieving the telephone number from at least one list (2, 7) storing telephone numbers and positional coordinates in a correspondina manner,
c) setting at least one desired point on a map with user's operation on the basis of map data (1) in storage means, if the inputted telephone number is not in said storage means, and
d) registering in said list (2, 7) the telephone number and the positional coordinates of the set point in a corresponding manner so as to be capable of retrieving a set of data of telephone numbers and positional coordinates having a corresponding relationship.

9. A method of using a navigation system comprising the steps of:
a) setting at least one desired point on a map as a memory point with user's operation on the basis of map data (1) in storage means,
b) inputting a telephone number as information correlated with the set point, and
c) registering in a list (2, 7) the telephone number and the positional coordinates of the set point in a corresponding manner so as to be capable of retrieving a set of data of telephone numbers and positional coordinates having a corresponding relationship.

## Patentansprüche

1. Navigationssystem mit:
a) einer Speichereinrichtung, die Kartendaten (1) und mindestens eine Liste (2, 7) zum entsprechenden Speichern von Telefonnummern und Positionskoordinaten enthält,
b) einer Telefonnummerneingabeeinrichtung (3) zum Eingeben einer Telefonnummer,
c) einer Punktfestlegungseinrichtung (8) zum Festlegen mindestens eines gewünschten Punkts auf der Karte durch Anwenderbedienung und
d) einer Abrufeinrichtung (6), die einen Satz Daten von Telefonnummern und Positionskoordinaten mit einer entsprechenden Beziehung abrufen kann,
**gekennzeichnet durch**
e) eine Steuereinrichtung (50) zum entsprechenden Registrieren, in der Liste (2, 7), der von der Telefonnummerneingabeeinrichtung (3) eingegebenen Telefonnummern und der von der Punktfestlegungseinrichtung (8) festgelegten Positionskoordinaten des Punkts.

2. System nach Anspruch 1, ferner mit einer Anzeigeeinrichtung (4) zum Anzeigen der Karte nach dem Lesen der Kartendaten auf der Grundlage der Positionskoordinaten.

3. System nach Anspruch 2, wobei die Anzeigeeinrichtung (4) nach dem Lesen der Kartendaten die Karte entsprechend den Koordinaten eines repräsentativen Punkts der Ortskennzahl der Telefonnummer anzeigt, wenn von der Abrufeinrichtung (6) entschieden ist, daß die eingegebene Telefonnummer nicht in der Speichereinrichtung ist.

4. System nach einem der Ansprüche 1 bis 3, wobei die Speichereinrichtung eine erste Liste (2) mit vorherigen Telefonnummern und Positionskoordinaten, die den Telefonnummern entsprechen, und eine zweite Liste (2, 7) mit Positionskoordinaten, die den Telefonnummern entsprechen, die vom Anwender in der Speichereinrichtung registriert sind, aufweist.

5. System nach Anspruch 4, wobei die Steuereinrichtung (50) die von der Telefonnummerneingabeeinrichtung (3) eingegebenen Telefonnummern und die von der Punktfestlegungseinrichtung (8) festgelegten Positionskoordinaten des Punkts in der zweiten Liste (2, 7) jeweils entsprechend registriert, wenn von der Abrufeinrichtung (6) entschieden wird, daß die eingegebene Telefonnummer nicht in der Liste (2, 7) ist.

6. System nach einem der Ansprüche 1 bis 5, wobei die Speichereinrichtung einen programmierbaren Datenaufbau aufweist.

7. System nach einem der Ansprüche 1 bis 6, ferner mit einer Punktkoordinatenfestlegungseinrichtung (9) zum Festlegen der von der Punktfestlegungseinrichtung (8) festgelegten Positionskoordinaten als Punktkoordinaten zur Durchführung einer Führung, wobei das System zum Führen auf der Grundlage der Punktkoordinaten bestimmt ist.

8. Verfahren zur Anwendung eines Navigationssystems mit den Schritten:
a) Eingeben einer Telefonnummer,
b) Abrufen der Telefonnummer aus mindestens einer Liste (2, 7), die Telefonnummern und Positionskoordinaten entsprechend speichert,
c) Festlegen mindestens eines gewünschten Punkts auf einer Karte durch Anwenderbedienung auf der Grundlage von Kartendaten (1) in einer Speichereinrichtung, wenn die eingegebene Telefonnummer nicht in der Speichereinrichtung ist, und
d) entsprechendes Registrieren in der Liste (2, 7) der Telefonnummer und der Positionskoordinaten des festgelegten Punkts, um einen Satz Daten von Telefonnummern und Positionskoordinaten mit einer entsprechenden Beziehung abrufen zu können.

9. Verfahren zur Anwendung eines Navigationssystems mit den Schritten:
a) Festlegen mindestens eines gewünschten Punkts auf der Karte als Speicherpunkt durch Anwenderbedienung auf der Grundlage von Kartendaten (1) in einer Speichereinrichtung,
b) Eingeben einer Telefonnummer als Information, die mit dem festgelegten Punkt korreliert, und
c) entsprechendes Registrieren, in einer Liste (2, 7), der Telefonnummer und der Positionskoordinaten des festgelegten Punkts, um einen Satz Daten von Telefonnummern und Positionskoordinaten mit einer entsprechenden Beziehung abrufen zu können.

## Revendications

1. Système de navigation comprenant :
a) un moyen de mémorisation contenant des données de carte (1) et au moins une liste (2, 7) pour mémoriser des numéros de téléphone et des coordonnées de position de manière correspondante,
b) un moyen d'entrée (3) de numéros de téléphone pour entrer un numéro de téléphone,
c) un moyen de sélection (8) de point pour sélectionner au moins un point souhaité sur une carte par une opération de l'utilisateur, et
d) un moyen d'extraction (6) capable d'extraire un ensemble de données de numéros de téléphone et de coordonnées de position ayant une relation correspondante,
**caractérisé par**
e) un moyen de commande (50) pour aligner dans ladite liste (2, 7) le numéro de téléphone entré par ledit moyen d'entrée (3) de numéros de téléphone et les coordonnées de position dudit point sélectionné par ledit moyen de sélection (8) de point de manière correspondante.

2. Système selon la revendication 1, comprenant en outre un moyen d'affichage (4) pour afficher la carte après lecture desdites données de carte en se basant sur lesdites coordonnées de position.

3. Système selon la revendication 2, dans lequel ledit moyen d'affichage (4) affiche la carte après lecture desdites données de carte en terme des coordonnées d'un point représentatif du code de zone du numéro de téléphone s'il est décidé par le moyen d'extraction (6) que ledit numéro de téléphone entré n'est pas dans ledit moyen de mémorisation.

4. Système selon l'une quelconque des revendications 1 à 3, dans lequel ledit moyen de mémorisation comporte : une première liste (2) ayant à l'avance des numéros de téléphone et des coordonnées de position correspondant auxdits numéros de téléphone, et une seconde liste (2, 7) ayant des coordonnées de position correspondant aux numéros de téléphone qui sont alignés par l'utilisateur dans ledit moyen de mémorisation.

5. Système selon la revendication 4, dans lequel ledit moyen de commande (50) aligne le numéro de téléphone entré par ledit moyen d'entrée (3) de numéros de téléphone et lesdites coordonnées de position du point sélectionné par ledit moyen de sélection (8) de point de manière correspondante dans ladite seconde liste (2, 7), respectivement, s'il est décidé par ledit moyen d'extraction (6) que ledit numéro de téléphone entré n'est pas dans ladite liste (2, 7).

6. Système selon l'une quelconque des revendications 1 à 5, dans lequel ledit moyen de mémorisation comprend une construction de données programmable.

7. Système selon l'une quelconque des revendications 1 à 6, comprenant en outre un moyen de sélection (9) de coordonnées de point pour sélectionner les coordonnées de position sélectionnées par ledit moyen de sélection (8) de point en tant que coordonnées de point pour exécuter un guidage, ledit système étant prévu pour le guidage basé sur lesdites coordonnées de point.

8. Procédé d'utilisation d'un système de navigation comprenant les étapes consistant à :
a) entrer un numéro de téléphone,
b) extraire le numéro de téléphone d'au moins une liste (2, 7) mémorisant des numéros de téléphone et des coordonnées de position de manière correspondante,
c) sélectionner au moins un point souhaité sur une carte par une opération de l'utilisateur en se basant sur des données de carte (1) dans un moyen de mémorisation, si le numéro de téléphone entré n'est pas dans ledit moyen de mémorisation, et
d) aligner dans ladite liste (2, 7) le numéro de téléphone et les coordonnées de position du point sélectionné de manière correspondante afin de pouvoir extraire un ensemble de données de numéros de téléphone et de coordonnées de position ayant une relation correspondante.

9. Procédé d'utilisation d'un système de navigation comprenant les étapes consistant à :
a) sélectionner au moins un point souhaité sur une carte comme point de mémoire par une opération de l'utilisateur en se basant sur des données de carte (1) dans un moyen de mémorisation,
b) entrer un numéro de téléphone en tant qu'information corrélée au point sélectionné, et
c) aligner dans une liste (2, 7) le numéro de téléphone et les coordonnées de position du point sélectionné de manière correspondante afin de pouvoir extraire un ensemble de données de numéros de téléphone et de coordonnées de position ayant une relation correspondante.
